# EUROPÄISCHE PATENTSCHRIFT

(11) **EP 2 178 891 B1**
(45) Veröffentlichungstag und Bekanntmachung des Hinweises auf die Patenterteilung: **11.12.2013**
(21) Anmeldenummer: 08773803.5
(22) Anmeldetag: 02.07.2008
(51) Int. Cl.: C07F 9/48, C08K 5/5393

(54) **PHOSPHONIGSÄUREN, -SALZE UND -ESTER, VERFAHREN ZU DEREN HERSTELLUNG UND IHRE VERWENDUNG**
PHOSPHONOUS ACIDS, SALTS AND ESTERS, METHODS FOR THE PRODUCTION THEREOF, AND USE OF SAME
ACIDES, SELS ET ESTERS PHOSPHONEUX, PROCÉDÉS DE PRODUCTION ET UTILISATION DE CES COMPOSÉS

(30) Priorität: 13.07.2007 DE 102007032669
(43) Veröffentlichungstag der Anmeldung: 28.04.2010
(73) Patentinhaber: Clariant Finance (BVI) Limited, Road Town, Tortola (VG)
(72) Erfinder: HILL, Michael, 50827 Köln (DE); BAUER, Harald, 50170 Kerpen (DE); KRAUSE, Werner, 50354 Hürth (DE)
(74) Vertreter: Mikulecky, Klaus
(86) Internationale Anmeldenummer: PCT/EP2008/005382
(87) Internationale Veröffentlichungsnummer: WO 2009/010188

(56) Entgegenhaltungen:
- EP-A- 0 233 154
- EP-A- 1 055 677
- EP-A- 1 055 679
- WO-A-01/19837
- CA-A1- 1 178 388
- DE-A1- 2 100 779
- DE-A1- 4 220 566
- DE-C1- 19 604 195
- US-A- 2 957 931
- US-A- 4 088 678
- US-A- 4 740 332
- US-A- 5 457 095
- SASSE, K.: "Houben -Weyl Methoden der Organischen Chemie" METHODEN DER ORGANISCHEN CHEMIE, ORGANISCHE PHOSPHOR-VERBINDUNGEN XII/1 GEORG THIEME VERLAG, STUTTGART, DE, Bd. 12/1, 1963, Seiten 257-259,261,294-301, XP002500739
- NIFANT'EV E E ET AL: "Reactions of acetylenes with hypophosphorous and phosphonous acids" JOURNAL OF GENERAL CHEMISTRY USSR, CONSULTANTS BUREAU, NEW YORK, NY, US, Bd. 56, Nr. 4, 20. September 1986 (1986-09-20), Seiten 680-688, XP002165520 ISSN: 0022-1279
- KARLA BRAVO-ALTAMIRANO AND JEAN-LUC MONTCHAMP: "Palladium-Catalyzed Dehydrative Allylation of Hypophosphorous Acid with Allylic Alcohols" ORGANIC LETTERS, Bd. 8, Nr. 18, 2006, Seiten 4169-4171, XP002500860 in der Anmeldung erwähnt
- SYLVINE DEPRÈLE AND JEAN-LUC MONTCHAMP: "Environmentally Benign Synthesis of H-Phosphinic Acids Using a Water-Tolerant, Recyclable Polymer-Supported Catalyst" ORGANIC LETTERS, Bd. 6, Nr. 21, 2004, Seiten 3805-3808, XP002500861 in der Anmeldung erwähnt
- SYLVINE DEPRÈLE AND JEAN-LUC MONTCHAMP: "Palladium-Catalyzed Hydrophosphinylation of Alkenes and Alkynes" J. AM. CHEM. SOC, Bd. 124, Nr. 32, 2002, - 9386 Seite 9387, XP002500862 in der Anmeldung erwähnt
- KARLA BRAVO-ALTAMIRANOA AND JEAN-LUC MONTCHAMP: "A NOVEL APPROACH TO PHOSPHONIC ACIDS FROM HYPOPHOSPHOROUS ACID" TETRAHEDRON LETTERS, Bd. 48, Nr. 33, 23. Juni 2007 (2007-06-23), - 13. August 2007 (2007-08-13) Seiten 5755-5759, XP002500863
- PATRICE RIBIÈRE, KARLA BRAVO-ALTAMIRANO, MONIKA I. ANTCZAK, JENNIFER D. HAWKINS, AND JEAN-LUC MONTCHAMP: "NiCl2-Catalyzed Hydrophosphinylation" J.ORG. CHEM., Bd. 70, Nr. 10, 2005, - 4064 Seite 4072, XP002530191 in der Anmeldung erwähnt
- ISABELLE ABRUNHOSA-THOMAS, CLAIRE SELLERS, AND JEAN-LUC MONTCHAMP: "Alkylation of H-Phosphinate Esters under Basic Conditions" J.ORG. CHEM, Bd. 72, 2007, Seiten 2851-2856, XP002530192

## Beschreibung

Die Erfindung betrifft Alkylphosphonigsäuren, -salze und -ester, Verfahren zu deren Herstellung und ihre Verwendung.

Alkylphosphonigsäuren, die etwa der Formel (I)

A-P(=O)(OX)-H (I)

entsprechen, sind nach dem bisher bekannten Stand der Technik nur teilweise bekannt, da sie bisher gar nicht oder nur sehr schwer zugänglich waren. Viele der bisher theoretisch denkbaren Alkylphosphonigsäuren sind noch nicht hergestellt worden.

Nach dem Stand der Technik gelingt die selektive Herstellung von Alkylphopsphonigsäuren ausgehend von Phosphinsäuren auf radikalisch initiertem Wege, etwa die radikalische Addition von Olefinen, Addition von Michael-Systemen oder der Addition von Alkylhalogeniden nur sehr unzureichend oder über Umwege, z. B. über eine Schutzgruppenroute; die Ausbeuten sind extrem gering.

Übergangsmetallkatalysiert ist die Herstellung lediglich mit langkettigen bzw. arylsubstituierten Olefinen bekannt (Montchamp, J.-L. et. al., J. Am. Chem. Soc. 2002, 124, 9386-9387 sowie Org. Lett. 2004, 6, 3805-3808 und 2006, 8, 4169-4171; auch J. Org. Chem. 2005, 70, 4064-4072). Zudem wird zum Erreichen des erwünschten monoalkylierten Produkts die Reaktion mit einem Überschuss an phosphorhaltiger Komponente durchgeführt. Bisher sind dafür als geeignet nur Phosphinsäure, Methyl-, Ethyl- und Butyl-Phosphinsäureester und das Phosphinsäureaniliniumsalz gefunden worden.

Der Erfindung liegt daher die Aufgabe zugrunde, Alkylphosphonigsäuren und Verfahren zu deren Herstellung zur Verfügung zu stellen, bei dem sich auf besonders einfache und wirtschaftliche Art und Weise sowie in entsprechend hohen Ausbeuten die gewünschten Alkylphosphonigsäuren herstellen lassen. Insbesondere Alkylphosphonigsäuren mit kurzen Seitenketten sollen sich reproduzierbar und mit guten Ausbeuten herstellen lassen.

Die Erfindung betrifft daher ein Verfahren zur Herstellung von Alkylphosphonigsäuren, -salzen und -estern, dadurch gekennzeichnet, dass man eine Phosphinsäurequelle mit Olefinen in Gegenwart eines Katalysators umsetzt, wobei die Olefine der allgemeinen Formel (II) entsprechen,

R¹R²C=CR³R⁴ (II)

in der R¹ bis R⁴ gleich oder verschieden sind und für Wasserstoff, eine Alkylgruppe mit 1 bis 18 Kohlenstoffatomen und/oder eine Alkenylgruppe mit 2 bis 18 Kohlenstoffatomen und/oder für Arylgruppe mit 8 bis 18 Kohlenstoffatomen und/oder funktionelle Gruppen wie Carbonyl-, Aldehyd-, Carboxy-, Hydroxy-, Sulfonsäure-, Nitril-, Cyano- und/oder Epoxygruppen; für primäre, sekundäre und/oder tertiäre Aminogruppen und/oder Ester oder Ethergruppen stehen, und wobei es sich bei dem Katalysator um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und wobei es sich bei der Phosphinsäurequelle um Phosphinsäure (hypophosphorige Säure H₃PO₂), ein Salz der Phosphinsäure, einen Ester der Phosphinsäure oder um Mischungen davon handelt, und unlösliches Produkt abfiltriert.

Bevorzugt handelt es sich beim Salz der Phosphinsäure um Alkalisalze, Erdalkalisalze, Salze der Elemente der dritten und vierten Hauptgruppe, der zweiten, vierten, achten Nebengruppe und der Lanthanoidgruppe, Ammoniumsalze, primäre, sekundäre, tertiäre, quarternäre Alkyl- und/oder Aryl-Ammoniumsalz.

Bevorzugt handelt es sich bei den Olefinen um Ethylen, 1-Propylen, 1-Buten, 1-Penten, 1-Hexen, Styrol, Allylamin, Allylalkohol, Allyl- und Vinylalkoholether, Acrylsäure, Acrylsäureester, Vinylacetat und/oder 1,3-Butadien handelt.

Bevorzugt handelt es sich bei den Übergangsmetallen und/oder Übergangsmetallverbindungen um solche aus der siebten und achten Nebengruppe handelt.

Besonders bevorzugt handelt es sich bei den Übergangsmetallen und/oder Übergangsmetallverbindungen um Rhodium, Nickel, Palladium und/oder Platin handelt.

Die Erfindung betrifft auch die Herstellung von Alkylphosphonigsäuren, -salzen und -estern nach einem oder mehreren der Ansprüche 1 bis 5 und anschließende Verwendung dieser Produkte
- als Binder,
- als Vernetzer bzw. Beschleuniger beim Aushärten von Epoxyharzen, Polyurethanen, ungesättigten Polyesterharzen.
- als Pflanzenschutzmittel,
- als Mineralöl-Additiv,
- als Korrosionsschutzmittel,
- in Wasch- und Reinigungsmittelanwendungen,
- in Elektronikanwendungen.

Die Erfindung betrifft ebenfalls die Herstellung von Alkylphosphonigsäuren, -salzen und -estern nach einem oder mehreren der Ansprüche 1 bis 5 und anschließende Verwendung dieser Produkte als Flammschutzmittel für Klarlacke und Intumeszenzbeschichtungen, als Flammschutzmittel für Holz und andere cellulosehaltige Produkte und/oder zum flammhemmend Ausrüsten von Polyester und Cellulose-Rein- und Mischgeweben durch Imprägnierung.

Mit dem erfindungsgemäßen Verfahren können Alkylphosphonigsäuren, -salze und -ester der Formel (I)

A-P(=O)(OX)-H (I)

hergestellt werden,
in der
- A: C₂-C₂₀-Alkyl, C₂-C₂₀-Alkylen, C₈-C₂₀ Alkaryl, ggf. substituiert, und
- X: H, Alkyl, Aryl, Alkylaryl, Alkenyl, substituierte Alkyl, Aryl, Alkaryl, Alkenyl, Ammonium, primäres, sekundäres, tertiäres, quaternäres Alkyl- und/oder Aryl-Ammonium, Alkali-, Erdalkalimetall, Metall der dritten und vierten Haupt- und der zweiten, vierten, achten Nebengruppe oder ein Metall der Lanthanoidgruppe bedeutet.

Bevorzugt handelt es sich hierbei um Ethyl-, n-Propyl-, i-Propyl-, n-Butyl-, i-Butyl-, n-Pentyl-, i-Pentyl-, n-Hexyl-, i-Hexyl-, 2-Phenylethyl-, 1-Phenylethyl-, 3-Phenyl-propyl-, 2-Phenylpropyl-, 2-Hydroxyethyl-, 3-Hydroxypropyl-, 2-Carboxyethyl-, 3-Carboxypropyl-, 2-Acetatoethyl-, 3-Acetatopropyl-, 2-Butyratoethyl-, 3-Butyratopropyl-, 2-Ethyloxyethyl-, 3-Ethyloxypropyl-, 2-Propyloxyethyl-, 3-Propyloxpropyl-, 2-Butyloxyethyl-, 3-Butyloxypropyl-, 3-Carbroxypropyl-, 2-Aminoethyl- und/oder 3-Aminopropylphosphonigsäure, deren Salze, deren Ester und/oder um Mischungen davon.

Bei den Alkylphosphonigsäuresalzen handelt es sich bevorzugt um Alkalisalze, Erdalkalisalze, Salze der Elemente der dritten und vierten Hauptgruppe, der zweiten, vierten, achten Nebengruppe und der Lanthanoidgruppe, Ammoniumsalze, primäre, sekundäre, tertiäre, quarternäre Alkyl- und/oder Aryl-Ammoniumsalze.

Bei den Alkylphosphonigsäure-estern handelt es sich bevorzugt um Alkyl-, Hydroxyalkyl-, Alkylaryl-, Aryl- und/oder Alkenylester.

Besonders bevorzugt handelt es sich hierbei um die Methyl-, Ethyl-, Propyl-, Butyl-, Ethylenglycol-, Propylenglycol-, Benzyl-, Phenyl-, Vinyl- und/oder Allylester.

Bevorzugt handelt es sich bei der Phosphinsäurequelle um Phosphinsäure (Hypophosphorige Säure H₃PO₂), ein Salz der Phosphinsäure, einen Ester der Phosphinsäure oder um Mischungen davon.

Die vorgenannten Alkylphosphonigsäuren, -salzen und -estern der Formel (I) lassen sich herstellung, in dem man
a) eine Phosphinsäurequelle mit Olefinen in Gegenwart eines Katalysators umsetzt,
b) wahlweise Lösungsmittel und/oder Olefin abtrennt,
c) Katalysator, Katalysatorsystem, Übergangsmetall und/oder
   Übergangsmetallverbindung abtrennt,
d) Liganden und/oder Komlexbildner abtrennt,
e) Hilfsmittel und/oder Olefin abtrennt.

Die Alkylphosphonigsäuren, -salzen und -estern der Formel (I) können auch hergestellt werden, in dem man
a) eine Phosphinsäurequelle mit Olefinen in Gegenwart eines Katalysators umsetzt,
b) wahlweise Katalysator abfiltriert,
c) Liganden und/oder Komplexbildner abtrennt,
d) Lösemittel abtrennt und wahlweise abgetrennten Katalysator oder Liganden und/oder Komplexbildner zu mindestens 90 % in Schritt a) zurückführt.

Bevorzugt handelt es sich beim Salz der Phosphinsäure um Alkalisalze, Erdalkalisalze, Salze der Elemente der dritten und vierten Hauptgruppe, der zweiten, vierten, achten Nebengruppe und der Lanthanoidgruppe, Ammoniumsalze, primäre, sekundäre, tertiäre, quarternäre Alkyl- und/oder Aryl-Ammoniumsalze.

Bevorzugt handelt es sich bei den Estern der Phosphinsäure um die Alkyl-, Hydroxylalkyl-, Alkylaryl-, Aryl- und/oder Alkenylester.

Bevorzugt handelt es sich bei den Katalysatoren um Übergangsmetalle und/oder Übergangsmetallverbindungen und/oder Katalysatorsysteme, die sich aus einem Übergangsmetall und/oder einer Übergangsmetallverbindung und mindestens einem Liganden zusammensetzen.

Bevorzugt wird das Katalysatorsystem durch Umsetzung von einem Übergangsmetall und/oder einer Übergangsmetallverbindung und mindestens einem Liganden gebildet.

Die Alkylphosphonigsäuren, -salze und -ester der Formel (I) können als reaktives und/oder nicht reaktives Flammschutzmittel für Polymere, zur Herstellung von flammgeschützten Polymerformmassen und zur Herstellung von flammgeschützten Polymerformkörpern eingesetzt werden.

Herstellbar sind auch flammgeschützte thermoplastische oder duroplastische Polymerformmassen, enthaltend 0,5 bis 45 Gew.-% Alkylphosphonigsäure, -salze oder -ester die nach dem erfindungsgemäßen Verfahren hergestellt wurde, 0,5 bis 95 Gew.-% thermoplastisches oder duroplastisches Polymer oder Mischungen derselben, 0 bis 55 Gew.-% Additive und 0 bis 55 Gew.-% Füllstoffbzw. Verstärkungsmaterialien, wobei die Summe der Komponenten 100 Gew.-% beträgt.

Herstellbar sind ebenfalls flammgeschützte thermoplastische oder duroplastische Polymer-Formkörper, -Filme,- Fäden und -Fasern, enthaltend 0,5 bis 45 Gew.-% Alkylphosphonigsäure, -salze oder -ester die nach dem erfindungsgemäßen Verfahren hergestellt wurde, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Bevorzugt bedeutet A auch C₂-C₆-Alkyl.

Bevorzugt bedeutet A auch C₂-C₈-Alkyl oder C₂-C₈-Alkylen.

Bevorzugt sind auch C₈-C₁₆-Alkaryl, insbesondere C₈-C₁₁-Alkaryl.

Bevorzugt trägt der Rest A Heteroatome und/oder ist mit funktionellen Gruppen substituiert.

Bevorzugt handelt es sich bei den funktionellen Gruppen um Carbonyl-, Aldehyd-, Carboxy-, Hydroxy-, Sulfonsäure-, Nitril-, Cyano- und/oder Epoxygruppen, um primäre, sekundäre und/oder tertiäre Aminogruppen und/oder um Ester-, Ethergruppen.

Bevorzugt handelt es sich bei den funktionalisierten Alkylgruppen um 2-Hydroxyethyl, 3-Hydroxypropyl, 2-Carboxyethyl, 3-Carbroxypropyl, 2-Aminoethyl, 3-Aminopropyl.

Der Rest A kann sich von einem Olefin der allgemeinen Formel

R¹R²C=CR³R⁴ (II)

ableiten, in der R¹ bis R⁴ gleich oder verschieden sein können und für Wasserstoff, Alkylgruppen mit 1 bis 18 Kohlenstoffatomen, Alkenylgruppen mit 2 bis 18 Kohlenstoffatomen und/oder für Arylgruppen mit 8 bis 18 Kohlenstoffatomen und/oder funktionelle Gruppen wie Carbonyl-, Aldehyd-, Carboxy-, Hydroxy-, Alkylphosphonigsäuren, -salzen und -estern die nach erfindungsgemäßem Verfahren hergestellt wurden,
- als Zwischenprodukt für weitere Synthesen,
- als Binder,
- als Vernetzer bzw. Beschleuniger beim Aushärten von Epoxyharzen, Polyurethanen, ungesättigten Polyesterharzen,
- als Polymerstabilisatoren,
- als Pflanzenschutzmittel,
- als Therapeutikum oder Additiv in Therapeutika für Menschen und Tiere,
- als Sequestrierungsmittel,
- als Mineralöl-Additiv,
- als Korrosionsschutzmittel,
- in Wasch- und Reinigungsmittelanwendungen,
- in Elektronikanwendungen.

Die Erfindung betrifft zudem die Verwendung von Alkylphosphonigsäuren, -salzen und -estern nach einem oder mehreren der Ansprüche 1 bis 6 und/oder Alkylphosphonigsäuren, -salzen und -estern die nach erfindungsgemäßem Verfahren hergestellt wurde, als Flammschutzmittel, insbesondere Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

Die Erfindung betrifft ebenso eine flammgeschützte thermoplastische oder duroplastische Polymerformmasse, enthaltend 0,5 bis 45 Gew.-% Alkylphosphonigsäure, -salze oder -ester nach mindestens einem der Ansprüche 1 bis 6 und/oder Alkylphosphonigsäuren, -salzen und -estern die nach erfindungsgemäßem Verfahren hergestellt wurde, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Schließlich betrifft die Erfindung flammgeschützte thermoplastische oder duroplastische Polymer-Formkörper, -Filme,- Fäden und Fasern, enthaltend 0,5 bis 45 Gew.-% Alkylphosphonigsäure, -salze oder -ester nach mindestens einem der Ansprüche 1 bis 6 und/oder Alkylphosphonigsäuren, -salzen und -estern die nach erfindungsgemäßem Verfahren hergestellt wurde, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Bevorzugt bedeutet A auch C₂-C₆-Alkyl.

Bevorzugt bedeutet A auch C₂-C₈-Alkyl oder C₂-C₈-Alkylen.

Bevorzugt sind auch C₈-C₁₆-Alkaryl, insbesondere C₈-C₁₁-Alkaryl.

Bevorzugt trägt der Rest A Heteroatome und/oder ist mit funktionellen Gruppen substituiert.

Bevorzugt handelt es sich bei den funktionellen Gruppen um Carbonyl-, Aldehyd-, Carboxy-, Hydroxy-, Sulfonsäure-, Nitril-, Cyano- und/oder Epoxygruppen, um primäre, sekundäre und/oder tertiäre Aminogruppen und/oder um Ester-, Ethergruppen.

Bevorzugt handelt es sich bei den funktionalisierten Alkylgruppen um 2-Hydroxyethyl, 3-Hydroxypropyl, 2-Carboxyethyl, 3-Carbroxypropyl, 2-Aminoethyl, 3-Aminopropyl.

Der Rest A kann sich von einem Olefin der allgemeinen Formel

R¹R²C=CR³R⁴ (II)

ableiten, in der R¹ bis R⁴ gleich oder verschieden sein können und für Wasserstoff, Alkylgruppen mit 1 bis 18 Kohlenstoffatomen, Alkenylgruppen mit 2 bis 18 Kohlenstoffatomen und/oder für Arylgruppen mit 8 bis 18 Kohlenstoffatomen und/oder funktionelle Gruppen wie Carbonyl-, Aldehyd-, Carboxy-, Hydroxy-, Sulfonsäure-, Nitril-, Cyano- und/oder Epoxygruppen; um primäre, sekundäre und/oder tertiäre Aminogruppen und/oder um Ester, Ethergruppen stehen.
Bevorzugt sind die Olefine lineare oder verzweigte α-Olefine.
Bevorzugt sind die Olefine cyclische oder offenkettige Olefine mit innenständiger Doppelbindung, cyclische oder offenkettige Diene und/oder Polyene.

Bevorzugt besitzen die Olefine 2 bis 20 Kohlenstoffatome.

Besonders bevorzugt besitzen die Olefine 2 bis 6 Kohlenstoffatome.

Bevorzugt tragen die Olefine Heteroatome und/oder eine funktionelle Gruppe.

Bevorzugt handelt es sich bei den funktionellen Gruppen um Carbonyl-, Aldehyd-, Carboxy-, Hydroxy-, Sulfonsäure-, Nitril-, Cyano- und/oder Epoxygruppen; um primäre, sekundäre und/oder tertiäre Aminogruppen und/oder um Ester, Ethergruppen.

Bevorzugte Olfine für das beschriebene Verfahren sind Ethylen, Propylen, 1-Buten, 3-Methylbuten, 1-Penten, 4-Methyl-1-penten, 1-Hexen, 1-Hepten, 1-Octene, 1-Nonen, 1-Decen, 1-Undecen, 1-Dodecen, 1-Tridecen, 1-Tetradecen, 1-Pentadecen, 1-Hexadecen, 1-Heptadecen, 1-Octadecen, 1-Nonadecen, 1-Eicosen, Styrol, Methylstyrol, 2-Buten, Cyclohexen, Norbornen, Butadien, 1,5-Hexadien, Acrylsäure und deren Methyl-, Ethyl- und Butylester, Methacrylsäure und deren Methyl-, Ethyl- und Butylester, Acrylonitril, Vinylacetat, Vinylbutyrat, Vinylbenzoat, Vinylethylether, Vinylbutylether, Divinylether, 2-Vinyl-1,3-dioxolan, Methyl-3-butenoat, Methyl-4-pentenoat, Allylalkohol, Allylacetat, Allylbutyrat, Allylethylether, Allylbutylether, Allylamin.

Besonders bevorzugt sind die Olefine Ethylen, 1-Propylen, 1-Buten, 2-Buten, 1-Penten, 1-Hexen, Styrol, Allylamin, Allylalkohol, Vinylacetat, Acrylsäure und Methyl-, Ethyl- und Butylester.

Besonders bevorzugt handelt es sich bei den Salzen der Phophinsäuren um die Lithium-, Natrium-, Kalium-, Magnesium-, Calcium-, Barium-, Aluminium-, Blei-, Titan-, Eisen-, Zink-, Ammonium-, Anilinium-, Trimethylammonium-, Triethylammonium-, Tripropylammonium-, Tributylammonium-, Tetramethylammonium-, Tetraethylammonium-, Tetrapropylammonium-, Tetrabutylammonium-, Trimethylsilylammonium- und/oder N-Ethylpiperidinsalze. Besonders bevorzugt handelt es sich beim Salz der Phosphinsäure um das Lithium-, Natrium-, Kalium-, Magnesium-, Calcium-, Barium-, Aluminium-, Blei-, Titan-, Eisen-, Zink-, Ammonium-, Anilinium-, Trimethyl-ammonium-, Triethylammonium-, Tripropylammonium-, Tributylammonium-, Tetramethylammonium-, Tetraethylammonium-, Tetrapropylammonium-, Tetrabutylammonium-, Trimethylsilylammonium- und/oder N-Ethylpiperidinsalz.

Bevorzugt handelt es sich bei den Estern der Phosphinsäure um die Methyl-, Ethyl-, Propyl-, Butyl-, Ethylenglycol-, Propylenglycol-, Benzyl-, Phenyl-, Vinyl- und/oder Allylester.

Bevorzugt setzt sich das Katalysatorsystem aus einem Übergangsmetall und/oder einer Übergangsmetallverbindung und mindestens einem Liganden zusammen.

Bevorzugt handelt es sich bei den Übergangsmetallen um Elemente der siebten und achten Nebengruppe (nach moderner Nomenklatur ein Metall der Gruppe 7, 8, 9 oder 10), wie etwa Rhenium, Ruthenium, Cobalt, Rhodium, Iridium, Nickel, Palladium, Platin.
Bevorzugt werden als Quelle der Übergangsmetalle und
Übergangsmetallverbindungen deren Metallsalze verwendet. Geeignete Salze beinhalten einfache Salze von Mineralsäuren, wie etwa die Anionen Fluorid, Chlorid, Bromid, Iodid, Fluorat, Chlorat, Bromat, Iodat, Fluorit, Chlorit, Bromit, lodit, Hypofluorit, Hypochlorit, Hypobromit, Hypoiodit, Perfluorat, Perchlorat, Perbromat, Periodat, Cyanid, Cyanat, Nitrat, Nitrid, Nitrit, Oxid, Hydroxid, Borat, Sulfat, Sulfit, Sulfid, Persulfat, Thiosulfat, Sulfamat, Phosphat, Phos-phit, Hypophosphit, Phosphid, Carbonat und Sulfonat, wie etwa Methansulfonat, Chlorosulfonat, Fluorosulfonat, Trifluoromethansulfonat, Benzolsulfonat, Naphthyl-sulfonat, Toluolsulfonat, t-Butylsulfonat, 2-Hydroxypropansulfonat und sulfonierte lonentauscherharze; und/oder organische Salze, wie etwa Acetylacetonate und Salze einer Carbonsäure mit bis zu 20 Kohlenstoffatomen, wie etwa Format, Acetat, Propionat, Butyrat, Oxalat, Stearat und Zitrat einschliesslich halogenierter Carbonsäuren mit bis zu 20 Kohlenstoffatomen, wie etwa Trifluoracetat, Trichloracetat.
Eine weitere Quelle der Übergangsmetalle und Übergangsmetallverbindungen stellen Salze der Übergangsmetalle mit Tetraphenylborat- und halogenierten Tetraphenylboratanionen, wie etwa Perfluorophenylborat, dar.

Geeignete Salze beeinhalten ebenso Doppelsalze und Komplexsalze bestehend aus einem oder mehreren Übergangsmetallionen und unabhängig voneinander ein oder mehrere Alkalimetall-, Erdalkalimetall-, Ammonium-, organische Ammonium-, Phosphonium- und organische Phosphoniumionen und unabhängig voneinander ein oder mehrere oben genannter Anionen. Geeignete Doppelsalze stellen z. B. Ammoniumhexachloropalladat und Ammoniumtetrachloropalladat dar.

Geeignete Quellen der Metallsalze stellen ebenfalls deren Komplexverbindungen dar. Komplexverbindungen der Metallsalze setzen sich aus den Metallsalzen und einem oder mehreren Komplexbildnern zusammen. Geeignete Komplexbildner sind z. B. Olefine, Diolefine, Nitrile, Dinitrile, Kohlenmonoxid, Phosphine, Diphosphine.

Bevorzugt ist eine Quelle der Übergangsmetalle das Übergangsmetall als Element und/oder eine Übergangsmetallverbindung in dessen null-wertigem Zustand.

Bevorzugt wird das Übergangsmetall metallisch eingesetzt.

Bevorzugt wird das Übergangsmetall auch als Legierung mit weiteren Metallen verwendet.

Besonders bevorzugt wird das Übergangsmetall als Legierung mit wenigstens einem zusätzlichen Element der Reihe Bor, Zirconium, Tantal, Wolfram, Rhenium, Kobalt, Iridium, Nickel, Palladium, Platin und/oder Gold verwendet.

Bevorzugt ist der Übergangsmetallgehalt in der eingesetzten Legierung 45 - 99,95 %.

Bevorzugt wird das Übergangsmetall mikrodispers (Teilchengröße 0,1 mm - 100 µm) eingesetzt.

Bevorzugt wird das Übergangsmetall auf einem Metalloxid wie etwa Aluminiumoxid, Siliciumdioxid, Titandioxid, Zirkoniumdioxid, Zinkoxid, Nickeloxid, Vanadiumoxid, Chromoxid, Magnesiumoxid, auf einem Metallcarbonat wie etwa Bariumcarbonat, Calciumcarbonat, Strontiumcarbonat, auf einem Metallsulfat wie etwa, Bariumsulfat, Calciumsulfat, Strontiumsulfat, auf einem Metallphosphat wie etwa Aluminiumphosphat, Vanadiumphosphat, auf einem Metallcarbid wie etwa Siliconcarbid, auf einem Metallaluminat wie etwa Calciumaluminat, auf einem Metallsilikat wie etwa Aluminiumsilikat, Kreiden, Zeolithe, Bentonit, Montmorillonit, Hectorit, auf einem Metallnitrid, auf Kohle, Aktivkohle, Mullite, Bauxite, Antimonite, Scheelite, Perovskite, Hydrotalcite, Heteropolyanionen und/oder Polyethylenimin/Siliciumdioxid geträgert verwendet.

Bevorzugt wird das Übergangsmetall als Komplexverbindung eingesetzt. Komplexverbindungen des Elements setzen sich aus dem Element und einem oder mehreren Komplexbildnern zusammen. Geeignete Komplexbildner sind Olefine, Diolefine, Nitrile, Dinitrile, Kohlenmonoxid, Phosphine und/oder Diphosphine, wie etwa Triphenylphosphin, Dibenzylidenaceton oder Styrol und können auf den oben genannten Trägermaterialien geträgert sein.

Geeignete Quellen von Übergangsmetallen und Übergangsmetallverbindungen sind beispielsweise Palladium,
1,4-Bis(diphenylphosphino)butanpalladium(II)chlorid, 2-(2'-Di-tert-butylphosphin)-biphenylpalladium(II)acetate, Ammoniumhexachloro-palladat(IV), Ammonium tetrachloropalladat(II), Bis(acetonitril)dichloropalladium(II),
Bis(benzonitril)palladium(II)chlorid, Bis(dibenzylidenaceton)palladium(0), Bis(triphenylphosphin)palladium(II)diacetat, Bis(triphenylphosphin)palladium(II)-dichlorid, Bromo(tri-tert-butylphosphin)palladium(I) Dimer, (Ethylendiamin)-palladium(II)chlorid, Palladium Schwarz, Palladiumhydroxid auf Aktivkohle, Palladiumhydroxid auf Kohle, Palladium(II)acetat, Palladium(II)acetylacetonat, Palladium(II)bromide, Palladium(II)chloride, Palladium(II)chlorid Diacetonitrilkomplex, Palladium(II)cyanid, Palladium(II)hexafluoroacetylacetonat, Palladium(II)iodid, Palladium(II)nitrat, Palladium(II)oxid, Palladium(II)thiosulfat Natriumsalz, Palladium(II)propionat, Palladium(II)sulfat, Palladium(II)sulfide, Palladium(II)tetrafluoroborat,Tetraacetonitrilkomplex, Palladium(II)trifluoroacetat, Palladium auf Alumina, Palladium auf Bariumcarbonat, Palladium auf Bariumsulfat, Palladium auf Calciumcarbonat, Palladium auf Kohle, Palladium auf Aktivkohle, Palladium auf StrontiumCarbonat, Natriumtetrachloropalladat(II), Tetrakis(acetonitril)palladium(II)tetrafluoroborat, Tetrakis(triphenylphosphin)palladium(0), Tetrakis(tricyclohexylphosphin)palladium, polymergebunden, (2-Methylallyl)palladium(II)chlorid Dimer, N-Methylimidazoliumpalladium(II), Platin/palladium/gold Legierung, Kaliumhexachloropalladat, Kaliumtetrachloropalladat, Tris(dibenzyliden-aceton)dipalladium Chloroformkomplex, [1,2,3,4-Tetrakis(methoxycarbonyl)-1,3-butadien-1,4-diyl]palladium(II), 1,2-Bis(phenylsulfinyl)ethanpalladium(II)acetate, (1,3-Bis(2,6-diisopropylphenyl)imidazoliden)(3-chloropyridyl)palladium(II)dichloride,
2-[Bis(triphenylphosphin)palladium(II)bromid]benzylalkohol, 2'-(Dimethylamino)-2-biphenylyl-palladium(II)chlorid Dinorbornylphosphinkomplex, 2-(Dimethylamino-methyl)ferrocen-1-yl-palladium(II)chloride, Dinorbornylphosphinekomplex , ([2S,3S]-Bis[Diphenylphosphino]butan)(η3-allyl)palladium(II)perchlorat, Bis[1,2-bis(diphenylphosphino)ethan]palladium(0), Bis(3,5,3',5'-dimethoxydibenzyliden-aceton)palladium(0), Bis[(diphenylphosphanyl)methyl]aminpalladium(II)acetat, polymergebunden, Bis[(diphenylphosphanyl)methyl]aminpalladium(II)dichlorid, polymergebunden, Bis(tri-tert-butylphosphin)palladium(0), Bromo(N-succinimidyl)bis(triphenylphosphin)palladium(II),
cis-Dichlorobis(dimethylphenylphosphin)palladium(II),
Diacetobis(triphenylphosphin)palladium(II), polymergebunden, Dichloro(1,10-phenanthrolin)palladium(II), Bis(1,5-cyclooctadien)palladium(0), Dichloro(1,5-cyclooctadien)palladium(II), Dichloro(N,N,N',N'-tetramethylethylendiamin)-Palladium(II), Dichlorobis(methyldiphenylphosphin)palladium(II), Dichlorobis(tri-o-tolylphosphin)palladium(II), Dichlorobis(tricyclohexylphosphin)palladium(II), Dichlorobis(triethylphosphin)palladium(II), Dichlorobis(triphenylphosphin)-palladium(II), polymergebunden, meso-Tetraphenyl-tetrabenzoporphin Palladiumkomplex , [(R)-(+)-2,2'-Bis(diphenylphosphino)-1,1'-binaphthyl]palladium(II)chloride, Tetrakis(methyldiphenylphosphin)palladium(0), trans-Benzyl(chloro)bis(triphenylphosphin)palladium(II), trans-Dibromobis(triphenylphosphin)palladium(II), Tris(3,3',3"-phophinidyntris(benzolsulfonato)palladium(0) Nonanatriumsalz, 1,3-Bis(2,4,6-trimethylphenyl)imidazol-2-yliden(1,4-naphthoquinon)palladium(0) Dimer, 1,3-Bis(2,6-diisopropylphenyl)imidazol-2-yliden(1,4-naphthoquinon)palladium(0) Dimer, 2,3,7,8,12,13,17,18-Octaethyl-21H,23H-porphinpalladium(II), 2-[Bis(2,4-di-tertbutyl-phenoxy)phosphinooxy]-3,5-di(tert-butyl)phenyl-palladium(II)chlorid Dimer, 5,10,15,20-Tetrakis(pentafluorophenyl)-21H,23H-porphinpalladium(II), Allyl[1,3-bis(2,6-diisopropylphenyl)imidazol-2-yliden]palladium(II)chloride, Allyl[1,3-bis(mesityl)imidazol-2-yliden]palladiumchlorid, Bis[tris(3-(1 H, H,2H,2H-perfluorodecyl)phenyl)phosphin]palladium(II)dichloride, Bis[tris(3-(heptadecafluorooctyl)phenyl)phosphin]palladium(II)dichloride, Bis[tris(4-(1 H,1H,2H,2H-perfluorodecyl)phenyl)phosphin]palladium(II)dichlorid, Bis[tris(4-(heptadecafluorooctyl)phenyl)phosphin]palladium(II)dichloride, Bromo[(2-(hydroxy-κO)methyl)phenylmethyl-κC](triphenylphosphin)palladium(II), Chloro(η2-P,C-tris(2,4-di-tert-butylphenyl)phosphit)(tricyclohexylphosphin)palladium(II), Di-µ-chlorobis[5-hydroxy-2-[1-(hydroxyimino-κN)ethyl]phenyl-κC]palladium(II) Dimer, Di-µ-chlorobis[5-chloro-2-[(4-chlorophenyl)(hydroxyimino-kn)methyl]phenyl-kc]palladium Dimer, Dichloro[(S)-N,N-dimethyl-1-[(R)-2-(diphenylphosphino)ferrocenyl]ethylamin]palladium(II), [1,1'-Bis(di-phenylphosphino)ferrocen]dichloropalladium(II), [1,2-Bis(diphenylphosphino)ethan]dichloropalladium(II), (2,2'-Bipyridin)dichloropalladium(II), Allylpalladium(II)chlorid Dimer, (Bicyclo[2.2.1]hepta-2,5-dien)dichloropalladium(II), Bis(di-tert-butyl(4-dimethyl-aminophenyl)phosphin)dichloropalladium(II), Di(acetato)dicyclohexyl-phenylphosphinpalladium(II), polymergebunden, Di-µ-chlorobis[2-[(dimethylamino)methyl]phenyl-C,N]dipalladium(II), Diamindibromopalladium(II), Diamindiiodopalladium(II), Tetraaminpalladium(II)acetate, Tetraaminpalladium(II)bromide, Tetraaminpalladium(II)chloride, Tetraaminpalladium(II)nitrate, Tetraaminpalladium(II)tetrachloropalladat(II), trans-Diamindichloropalladium(II), trans-Diamindinitropalladium(II), Tris(dibenzylidenaceton)dipalladium(0), Nickel,
1,3-Bis(diphenylphosphino)propannickel(II)chlorid, 2,3,7,8,12,13,17,18-Octaethyl-21H,23H-porphinnickel(II), 5,10,15,20-Tetraphenyl-21H,23H-porphinnickel(II), Allyl(cyclopentadienyl)nickel(II), Allylnickel(II)chlorid Dimer, Aluminum-Nickel Legierung, Bis(tert.-butylisocyanid)Palladium(II)chloride, Ammoniumnickel(II)sulfat, Bis(1,5-cyclooctadien)nickel(0), Bis[5-[[4-(dimethylamino)phenyl]imino]-8(5H)-quinolinon]nickel(II), Bis(cyclopentadienyl)nickel(II), Bis(methylcyclopentadienyl)nickel(II), Bis(pentamethylcyclopentadienyl)nickel(II), Bis(tetramethylcyclopentadienyl)nickel(II), Bis(triphenylphosphin)dicarbonylnickel, Bis(triphenylphosphin)nickel(II)dichlorid,
Chloro(cyclopentadienyl)(triphenylphosphin)nickel(II), Dibromo-bis(tributylphosphin)nickel(II), Dibromobis(triphenylphosphin)nickel(II), Dichlorobis(tributylphosphin)nickel(II), Dichlorobis(trimethylphosphin)nickel(II), Eisen-Nickel Legierung, Nickelcarbonat, Nickel(II)1,4,8,11,15,18,22,25-octabutoxy-29H,31H-phthalocyanin, Nickel(II)acetat, Nickel(II)acetylacetonat, Nickel(II)bromid, Nickel(II)bromid 2-Methoxyethyletherkomplex, Nickel(II)bromid Ethylenglycoldimethyletherkomplex, Nickel(II)carbonat, Nickel(II)chlorid, Nickel(II)fluorid, Nickel(II)hexafluoroacetylacetonat, Nickel(II)iodid, Nickel(II)nitrat, Nickel(II)peroxid, Nickel(II)phthalocyaninetetrasulfonsäure Tetranatriumsalz, Nickel(II)stearat, Nickel(II)sulfat, Nickei(II)tetrakis(4-cumylphenoxy)phthalocyanin, Nickel auf Silika, Nickel auf Silika/Alumina, 1,2-Dimethoxyethannickeldibromid, Nickeloxid auf Silika, Nickelphosphid, Nickelsulfid, Kaliumhexafluoronickelat(IV), Kaliumtetracyano-nickelat(II), Raney®-Nickel, Tetrakis(triphenylphosphin)nickel(0), Tetrakis(triphenylphosphit)nickel(0), Nickelborid, Nickelchromoxid, Nickelcobaltoxid, Nickel(II)2,11,20,29-tetra-tert-butyl-2,3-naphthalocyanin, Nickel(II)2,9,16,23-tetraphenoxy-29H,31H-phthalocyanin, Nickel(II)2-ethylhexanoat, Nickel(II)5,9,14,18,23,27,32,36-octabutoxy-2,3-naphthalocyanin, Nickel(II)bis(2,2,6,6-tetramethyl-3,5-heptanedionat), Nickel(II)carbonathydroxid, Nickel(II)cyclohexanbutyrat, Nickel(II)hydroxid, Nickel(II)molybdat, Nickel(II)octanoat, Nickel(II)oxalat, Nickel(II)oxid, Nickel(II)perchlorat, Nickel(II)phthalocyanin, Nickel(II)sulfamat, Nickel(II)sulfat, Nickel-Zink-Eisen-Oxid, Etioporphyrin I Nickel, Lanthanoid-Nickel-Legierung, LaNi_{4.5}Co_{0.5}, Lanthanoid-Nickel-Legierung, LaNi₅, Mischmetall Nickel-Legierung, (Ce, La, Nd, Pr)Ni₅, Kaliumnickel(IV)paraperiodat, Zirconium-Nickel-Legierung, Bis(ethylcyclopentadienyl)nickel(II), Bis(ethylendiamin)nickel(II)chlorid, Bis(N,N'-diisopropylacetamidinato)nickel(II), Tris(ethylendiamin)nickel(II)chlorid, Bis(N,N-dimethyl-N'-5H-pyrido[2,3-a]phenothiazin-5-yliden-1,4-phenylendiamin)nickel(II)diperchlorat, Bis(1,3-diamino-2-propanol)nickel(II)thiocyanat, Bis(N,N-diethylethylendiamin)nickel(II) thiocyanat, Tris(ethylendiamin)nickel(II)chlorid, Tris(ethylendiamin)nickel(II)sulfat, 2,2'-Thiobis(4-tert-octylphenolato)-N-butylaminnickel(II),
[1,1'-Bis(diphenylphosphino)ferrocen]dichloronickel(II),
[1,2-Bis(diphenylphosphino)ethan]dichloronickel(II), Chloro(ethylcyclopentadienyl)-(triphenylphosphinenickel(II), Dilithiumtetrabromonickelat(II), Hexaamin-nickel(II)bromid, N,N'-Bis(salicyliden)ethylenediaminonickel(II), Kaliumtetracyano-nickelat(II), cis-Diamineplatin(II)dichlorid, cis-Dichlorobis(diethylsulfid)platin(II), cis-Dichlorobis(pyridin)platin(II), cis-Dichlorobis(triethylphosphin)platin(II), cis-Dichlorobis(triphenylphosphin)platin(II), Dibromo(1,5-cyclooctadien)platin(II), Dichloro(1,10-phenanthrolin)platin(II), Dichloro(1,2-diaminocyclohexan)platin(II), Dichloro(1,5-cyclooctadien)platin(II), Dichloro(ethylendiamin)platin(II), Dichloro-bis(ethylendiamin)platin(II), Ethylenbis(triphenylphosphin)platin(0), (N,N,N'-Trimethy(ethylendiamin)platin(III)chlorid, polymergebunden, Platin, Platin(0)-1,3-divinyl-1,1,3,3-tetramethyldisiloxan, Platin(0)-2,4,6,8-tetramethyl-2,4,6,8-tetravinylcyclotetrasiloxan, Platin Schwarz, Platin(II)acetylacetonat, Platin(II)bromid, Platin(II)chlorid, Platin(II)iodid, Platin(IV)chlorid, Platin(IV)oxid, Platin auf Aktivkohle, Platin auf Alumina, Platin auf Kohle, Platin auf Silika, Kaliumhexachloroplatinat(IV), Tetrakis(triphenylphosphin)platin(0), trans-Dichlorobis(triethylphosphin)platin(II),
trans-Dichlorobis(triphenylphosphin)platin(II), Ammoniumhexachloroplatinat(IV), Ammoniumtetrachloroplatinat(II), Platin(II)cyanid, Platin-Iridium Legierung (70:30), Platin(IV)sulfid, Platinoctaethylporphyrin, Platin-Palladium-Gold Legierung, Platin-Rhodium Legierung, Natriumhexachloroplatinat(IV), trans-Platin(II)diamindichlorid, Kaliumtetrachloroplatinat(II), Kaliumtetracyanoplatinat(II), Chloro(2,2':6',2"-terpyridin)platin(II)chlorid, Dichloro(2,2':6',2"-terpyridin)platin(II), Oxaliplatin, trans-Dichlorobis(diethylsulfid)platin(II), Trimethyl(methylcyclopentadienyl)platin(IV), Carboplatin, (+)-Trans-dichloro(ethylen)(ALPHA-methylphenethylamin)platin(II),
(1,5-Cyclooctadien)dimethylplatin(II), (2,2'-Bipyridin)dichloroplatin(II), Chloroplatinsäure, cis-Bis(acetonitril)dichloroplatin(II),
cis-Bis(benzonitril)dichloroplatin(II), cis-Diammintetrachloroplatin(IV), Diamindinitritoplatin(II), Kaliumtrichloro(ethylen)platinat(II),
Natriumhexahydroxyplatinat(IV), Tetraaminplatin(II)chlorid,
Tetraaminplatin(II)hydroxid, Tetraaminplatin(II)nitrat, Tetraaminplatin(II)tetrachloroplatinat(II), Tetrabutylammoniumhexachloroplatinat(IV), Rhodiumacetat Dimer, Rhodiumchlorid, Rhodiumbromid, Rhodiumiodid, Rhodiumacetylacetonat, Acetylacetonatobis(ethylen)rhodium, Chlorobis(ethylen)rhodium Dimer, Dicarbonyl(acetylacetonato)rhodium, Hexarhodiumhexadecacarbonyl, Chloro(1,5-cyclooctadien)rhodium Dimer, Chloro(norbomadien)rhodium Dimer, Chloro(1,5-hexadien)rhodium Dimer, Chlorocarbonylbis(triphenylphosphin), Hydridocarbonyltris(triphenylphosphin)rhodium, Chlorotris(triphenylphosphin)-rhodium, Bromotris(triphenylphosphin)rhodium,
Iodotris(triphenylphosphin)rhodium, Chlorocarbonylbis(trimethylphosphit)rhodium, Bromotris(triphenylphosphin)rhodium, Chloro(1,5-cyclooctadienyl)-(triphenylphosphin)rhodium, Trichlorotris(pyridin)rhodium und/oder Bis(1,5-cyclooctadien)rhodium(I)tetrafluoroborat.

Bevorzugt handelt es sich bei den Liganden um Phosphine der Formel (III)

PR⁵₃ (III)

in der die Reste R⁵ unabhängig voneinander Wasserstoff, geradkettiges, verzweigtes oder cyclisches C₁-C₂₀ Alkyl, C₁-C₂₀ Alkylaryl, C₂-C₂₀ Alkenyl, C₂-C₂₀ Alkinyl, C₁-C₂₀ Carboxylat, C₁-C₂₀ Alkoxy, C₁-C₂₀ Alkenyloxy, C₁-C₂₀ Alkinyloxy, C₂-C₂₀ Alkoxycarbonyl, C₁-C₂₀ Alkylthio, C₁-C₂₀ Alkylsulfonyl, C₁-C₂₀ Alkylsulfinyl, Silyl und deren Derivative und/oder durch wenigstens ein R⁶ substituiertes Phenyl- oder durch wenigstens ein R⁶ substituiertes Naphtyl stehen. R⁶ steht unabhängig voneinander für Wasserstoff, Fluor, Chlor, Brom, Iod, NH₂, Nitro, Hydroxy, Cyano, Formyl, geradkettiges, verzweigtes oder cyclisches C₁-C₂₀ Alkyl, C₁-C₂₀ Alkoxy, HN(C₁-C₂₀ Alkyl), N(C₁-C₂₀ Alkyl)₂, -CO₂-(C₁-C₂₀ Alkyl), -CON(C₁-C₂₀ Alkyl)₂, -OCO(C₁-C₂₀ Alkyl), NHCO(C₁-C₂₀ Alkyl), C₁-C₂₀ Acyl, -SO₃M, -SO₂N(R⁷)M, -CO₂M, -PO₃M₂, -AsO₃M₂, -SiO₂M, -C(CF₃)₂OM (M = H, Li, Na, K), wobei R⁷ Wasserstoff, Fluor, Chlor, Brom, Iod, geradkettiges, verzweigtes oder cyclisches C₁-C₂₀ Alkyl, C₂-C₂₀ Alkenyl, C₂-C₂₀ Alkinyl, C₁-C₂₀ Carboxylat, C₁-C₂₀ Alkoxy, C₁-C₂₀ Alkenyloxy, C₁-C₂₀ Alkinyloxy, C₂-C₂₀ Alkoxycarbonyl, C₁-C₂₀ Alkylthio, C₁-C₂₀ Alkylsulfonyl, C₁-C₂₀ Alkylsulfinyl, Silyl und deren Derivative, Aryl, C₁-C₂₀ Arylalkyl, C₁-C₂₀ Alkylaryl, Phenyl und/oder Biphenyl sein können.

Vorzugsweise sind alle Gruppen R⁵ identisch.

Geeignete Phosphine (III) sind beispielsweise Trimethylphosphin, Triethylphosphin, Tripropylphosphin, Triisopropylphosphin, Tributylphosphin, Triisobutylphosphin, Triisopentylphosphin, Trihexylphosphin, Tricyclohexylphosphin, Trioctylphosphin, Tridecylphosphin, Triphenylphosphin, Diphenylmethylphosphin, Phenyldimethyl-phosphin, Tri(o-tolyl)phosphin, Tri(p-tolyl)phosphin, Ethyldiphenylphosphin, Dicyclohexylphenylphosphin, 2-Pyridyldiphenylphosphin, Bis(6-methyl-2pyridyl)-phenylphosphin, Tri-(p-chlorophenyl)phosphin, Tri-(p-methoxyphenyl)phosphin, Diphenyl(2-sulfonatophenyl)phosphin Natriumsalz, Diphenyl(2-sulfonatophenyl)phosphin Kaliumsalz, Diphenyl(2-sulfonatophenyl)phosphin Ammoniumsalz, Diphenyl(3-sulfonatophenyl)phosphin Natriumsalz, Diphenyl(3-sulfonatophenyl)phosphin Kaliumsalz, Diphenyl(3-sulfonatophenyl)phosphin Ammoniumsalz, Bis(4,6-dimethyl-3-sulfonatophenyl)(2,4-dimethylphenyl)phosphin Dinatriumsalz, Bis(4,6-dimethyl-3-sulfonatophenyl)(2,4-dimethylphenyl)phosphin Dikaliumsalz, Bis(4,6-dimethyl-3-sulfonatophenyl)(2,4-dimethylphenyl)phosphin Diammoniumsalz, Bis(3-sulfonatophenyl)phenylphosphine Dinatriumsalz, Bis(3-sulfonatophenyl)phenylphosphin Dikaliumsalz, Bis(3-sulfonatophenyl)phenylphosphin Diammoniumsalz , Tris(4,6-dimethyl-3-sulfonatophenyl)phosphin Trinatriumsalz, Tris(4,6-dimethyl-3-sulfonatophenyl)phosphin Trikaliumsalz, Tris(4,6-dimethyl-3-sulfonatophenyl)phosphin Triammoniumsalz, Tris(2-sulfonatophenyl)phosphin Trinatriumsalz, Tris(2-sulfonatophenyl)phosphin Trikaliumsalz, Tris(2-sulfonatophenyl)phosphin Triammoniumsalz, Tris(3-sulfonatophenyl)phosphin Trinatriumsalz, Tris(3-sulfonatophenyl)phosphin Trikaliumsalz, Tris(3-sulfonatophenyl)phosphin Triammoniumsalz,
2-Bis(diphenylphosphinoethyl)trimethylammoniumiodid, 2'-Dicyclohexylphosphino-2,6-dimethoxy-3-sulfonato-1,1'-biphenyl Natriumsalz, Trimethylphosphit und/oder Triphenylphosphit.

Besonders bevorzugt handelt es sich bei den Liganden um bidentate Liganden der allgemeinen Formel

R⁵₂M-X-MR⁵₂ (IV).

In dieser Formel repräsentieren M unabhängig voneinander N, P, As oder Sb. Bevorzugt sind die beiden M gleich und besonders bevorzugt steht M für ein Phosphoratom.

Jede Gruppe R⁵ repräsentiert unabhängig voneinander die unter Formel III beschrieben Reste. Vorzugsweise sind alle Gruppen R⁵ identisch.

X stellt bevorzugt eine bivalente Überbrückungsgruppe dar, die wenigstens 1 Brückenatom enthält, wobei bevorzugt 2 bis 6 Brückenatome enthalten sind.

Brückenatome können ausgewählt werden aus C-, N-, O-, Si- und S-Atomen. Bevorzugt ist X eine organische Überbrückungsgruppe, die wenigstens ein Kohlenstoffatom enthält. Bevorzugt ist X eine organische Überbrückungsgruppe, die 1 bis 6 Brückenatome enthält, wovon wenigstens zwei Kohlenstoffatome sind, unsubstituiert oder substituiert sein können.

Bevorzugte Gruppen X sind -CH₂-, -CH₂-CH₂-, -CH₂-CH₂-CH₂-, -CH₂-CH(CH₃)-CH₂-, -CH₂-C(CH₃)₂-CH₂-, -CH₂-C(C₂H₅),-CH₂-, -CH₂-Si(CH₃)₂-CH₂-, -CH₂-O-CH₂-, -CH₂-CH₂-CH₂-CH₂-, -CH₂-CH(C₂H₅)-CH₂-, -CH₂-CH(n-Pr)-CH, und -CH₂-CH(n-Bu)-CH₂-, unsubstituierte oder substituierte 1,2-Phenyl-Reste, unsubstituierte oder substituierte 1,2-Cyclohexyl-Reste, unsubstituierte oder substituierte 1,1'- oder 1,2-Ferrocenyl-Reste und/oder unsubstituierte oder substituierte 2,2'-(1,1'-Biphenyl)-Reste, unsubstituierte oder substituierte 4,5-Xanthen-Reste und/oder unsubstituierte oder substituierte Oxydi-2,1-phenylen-Reste.

Geeignete bidentate Phosphinliganden sind beispielsweise
1,2-Bis(dimethylphosphino)ethan, 1,2-Bis(diethylphosphino)ethan, 1,2-Bis(dipropylphosphino)ethan, 1,2-Bis(diisopropylphosphino)ethan, 1,2-Bis(dibutylphosphino)ethan, 1,2-Bis(di-tert.-butylphosphino)ethan, 1,2-Bis(dicyclohexylphosphino)ethan, 1,2-Bis(diphenyl-phosphino)ethan, 1,3-Bis(dicyclohexylphosphino)propan, 1,3-Bis(diisopropylphosphino)propan, 1,3-Bis(di-tert.-butylphosphino)propan, 1,3-Bis(diphenylphosphino)propan, 1,4-Bis-(diisopropylphosphino)butan, 1,4-Bis(diphenylphosphino)butan, 1,5-Bis(dicyclohexylphosphino)pentan, 1,2-Bis(di-tert.-butylphosphino)benzol, 1,2-Bis(diphenylphosphino)benzol, 1,2-Bis(di-cyclohexylphosphino)benzol, 1,2-Bis(dicyclopentylphosphino)benzol, 1,3-Bis(di-tert.-butylphosphino)benzol, 1,3-Bis(diphenylphosphino)benzol, 1,3 Bis(di-cyclohexylphosphino)benzol, 1,3-Bis(dicyclopentylphosphino)benzol, 9,9-Dimethyl-4,5-bis(diphenylphosphino)xanthen, 9,9-Dimethyl-4,5-bis(diphenylphosphino)-2,7-di-tert.-butyl-xanthen, 9,9-Dimethyl-4,5-bis(di-tert.-butylphosphino)xanthen, 1,1'-Bis(diphenylphosphino)-ferrocen, 2,2'-Bis(diphenylphosphino)-1,1'-binaphthyl, 2,2'-Bis(di-p-tolylphosphino)-1,1'-binaphthyl, (Oxydi-2,1-phenylen)bis(diphenylphosphin), 2,5-(di-isopropylphospholano)benzol, 2,3-O-Isopropropyliden-2,3-dihydroxy-1,4-bis(diphenylphosphino)butan, 2,2'-Bis(di-tert.-butylphosphino)-1,1'-biphenyl, 2,2'-Bis(dicyclohexylphosphino)-1,1'-biphenyl, 2,2'-Bis(diphenylphosphino)-1,1'-biphenyl, 2-(Di-tert.-butylphosphino)-2'-(N,N-dimethylamino)biphenyl, 2-(Dicyclohexylphosphino)-2'-(N,N-dimethylamino)biphenyl, 2-(Diphenylphosphino)-2'-(N,N-dimethylamino)biphenyl, 2-(Diphenylphosphino)ethylamin, 2-[2-(Diphenylphosphino)ethyl]pyridin, 1,2-Bis(di-4-sulfonatophenylphosphino)benzol Tetranatriumsalz, 1,2-Bis(di-4-sulfonatophenylphosphino)benzol Tetrakaliumsalz, 1,2-Bis(di-4-sulfonatophenylphosphino)benzol Tetraammoniumsalz, (2,2'-Bis [[bis(3-sulfonatophenyl)phosphino]methyl]-4,4',7,7'-tetrasulfonato-1,1'-binapthyl Octanatriumsalz, (2,2'-Bis [[bis(3-sulfonatophenyl)phosphino]methyl]-4,4',7,7'-tetrasulfonato-1,1'-binapthyl Octakaliumsalz, (2,2'-Bis [[bis(3-sulfonatophenyl)phosphino]methyl]-4,4',7,7'-tetrasulfonato-1,1'-binapthyl Octaammoniumsalz, (2,2'-Bis[[bis(3-sulfonatophenyl)phosphino]methyl]-5,5'-tetrasulfonato-1,1'-biphenyl Hexanatriumsalz, (2,2'-Bis[[bis(3-sulfonatophenyl)phosphino]methyl]-5,5'-tetrasulfonato-1,1'-biphenyl Hexakaliumsalz (2,2'-Bis[[bis(3-sulfonatophenyl)phosphino]methyl]-5,5'-tetrasulfonato-1,1'-biphenyl Hexaammoniumsalz, (2,2'-Bis [[bis(3-sulfonatophenyl)phosphino]methyl]-1,1'-binapthyl Tetranatriumsalz, (2,2'-Bis [[bis(3-sulfonatophenyl)phosphino]methyl]-1,1'-binapthyl Tetrakaliumsalz, (2,2'-Bis [[bis(3-sulfonatophenyl)phosphino]methyl]-1,1'-binapthyl Tetraammoniumsalz, (2,2'-Bis[[bis(3-sulfonatophenyl)phosphino]methyl]-1,1'-biphenyl Tetranatriumsalz, (2,2'-Bis[[bis(3-sulfonatophenyl)phosphino]methyl]-1,1'-biphenyl Tetrakaliumsalz, (2,2'-Bis[[bis(3-sulfonatophenyl)phosphino]methyl]-1,1'-biphenyl Tetraammoniumsalz, 9,9-Dimethyl-4,5-bis(diphenylphosphino)-2,7-sulfonato-xanthen Dinatriumsalz, 9,9-Dimethyl-4,5-bis(diphenylphosphino)-2,7-sulfonato-xanthen Dikaliumsalz, 9,9-Dimethyl-4,5-bis(diphenylphosphino)-2,7-sulfonato-xanthen Diammoniumsalz, 9,9-Dimethyl-4,5-bis(di-tert.-butylphosphino)-2,7-sulfonato-xanthen Dinatriumsalz, 9,9-Dimethyl-4,5-bis(di-tert.-butylphosphino)-2,7-sulfonato-xanthen Dikaliumsalz, 9,9-Dimethyl-4,5-bis(di-tert.-butylphosphino)-2,7-sulfonato-xanthen Diammoniumsalz, 1,2-Bis(di-4-sulfonatophenylphosphino)benzol Tetranatriumsalz 1,2-Bis(di-4-sulfonatophenylphosphino)benzol Tetrakaliumsalz 1,2-Bis(di-4-sulfonatophenylphosphino)benzol Tetraammoniumsalz, Meso-tetrakis(4-sulfonatophenyl)porphin Tetranatriumsalz, Meso-tetrakis(4-sulfonatophenyl)porphin Tetrakaliumsalz, Meso-tetrakis(4-sulfonatophenyl)porphin Tetraammoniumsalz, Meso-tetrakis(2,6-dichloro-3-sulfonatophenyl)porphin Tetranatriumsalz, Meso-tetrakis(2,6-dichloro-3-sulfonatophenyl)porphin Tetrakaliumsalz, Meso-tetrakis(2,6-dichloro-3-sulfonatophenyl)porphin Tetraammoniumsalz, Meso-tetrakis(3-sulfonatomesityl)porphin Tetranatriumsalz, Meso-tetrakis(3-sulfonatomesityl)porphin Tetrakaliumsalz, Meso-tetrakis(3-sulfonatomesityl)porphin Tetraammoniumsalz, Tetrakis(4-carboxyphenyl)porphin, 5,11,17,23-Sulfonato-25,26,27,28-tetrahydroxycalix[4]aren.

Zudem können die Liganden der Formel III und IV durch die Reste R⁵ und/oder die Überbrückungsgruppe an ein geeignetes Polymer oder anorganisches Substrat gebunden sein.

Bevorzugt hat das Katalysatorsystem ein Übergangsmetall-Ligand-Molverhältnis von 1:0.01 bis 1:100.

Besonders bevorzugt hat das Katalysatorsystem ein Übergangsmetall-Ligand-Molverhältnis von 1:0.05 bis 1:10.

Ganz besonders bevorzugt hat das Katalysatorsystem ein Übergangsmetall-Ligand-Molverhältnis von 1:1 bis 1:4.

Bevorzugt wird das Katalysatorsystem vor der Umsetzung und/oder zu Beginn der Umsetzung und/oder während der Umsetzung in situ generiert.

Bevorzugt wirkt der Katalysator während der Umsetzung homogen und/oder heterogen.

Bevorzugt wirkt der heterogen wirkende Katalysator während der Umsetzung als Suspension oder an eine feste Phase gebunden.

Bevorzugt erfolgt die Umsetzung in einem Lösungsmittel als Ein-Phasen-System in homogener oder heterogener Mischung und/oder in der Gasphase.
Vorteil der Umsetzung in einem Lösungsmittel ist eine geringere Wärmetönung und im Zuge dessen eine geringere Bildung an Nebenprodukten.

Wird ein Mehr-Phasen-System verwendet kann zusätzlich ein Phasentransferkatalysor eingesetzt werden.

Geeignete Lösungsmittel sind Wasser, Alkohole, wie z. B. Methanol, Ethanol, i-Propanol, n-Propanol, n-Butanol, i-Butanol, t-Butanol, n-Amylalkohol, i-Amylalkohol, t-Amylalkohol, n-Hexanol, n-Octanol, i-Octanol, n-Tridecanol, Benzylalkohol etc. Bevorzugt sind weiterhin Glycole wie z. B. Ethylenglycol, 1,2-Propandiol, 1,3-Propandiol, 1,3-Butandiol, 1,4-Butandiol, Diethylenglycol etc.; aliphatische Kohlenwasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; alicyclische Kohlenwasserstoffe wie Cyclopentan, Cyclohexan, und Methylcyclohexan etc.; Ether wie Anisol (Methylphenylether), t-Butylmethylether, Dibenzylether, Diethylether, Dioxan, Diphenylether, Methylvinylether, Tetrahydrofuran, Triisopropylether etc.; Glycolether wie Diethylenglycoldiethylether, Diethylenglycoldimethylether (Diglyme), Diethylenglycolmonobutylether, Diethylenglycolmonomethylether, 1,2-Dimethoxy-ethan (DME Monoglyme), Ethylenglycolmonobutylether, Triethylenglycoldimethylether (Triglyme), Triethylenglycolmonomethylether etc.; Ketone wie Aceton, Diisobutylketon, Methyl-n-propylketon; Methylethylketon, Methyl-i-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc. Eine oder mehrere dieser Verbindungen können allein oder in Kombination eingesetzt werden.

Geeignete Lösungsmittel umfassen zudem die eingesetzten Olefine und Phosphinsäurequellen. Diese bieten Vorteile in Form einer höheren Raum-ZeitAusbeute.

Bevorzugt wird die Umsetzung unter dem eigenen Dampfdruck des Olefins und/oder des Lösungsmittels durchgeführt.

Besonders erfolgt die Umsetzung in einer Atmosphäre, die weitere gasförmige Bestandteile wie zum Beispiel Stickstoff, Sauerstoff, Argon enthält.

Bevorzugt erfolgt die Umsetzung bei einem Partialdruck des Olefins von 0.01 - 100 bar.

Besonders bevorzugt erfolgt die Umsetzung bei einem Partialdruck des Olefins von 0.1 - 10 bar.

Bevorzugt wird die Umsetzung bei einer Temperatur von -20 bis 340 °C durchgeführt.

Besonders bevorzugt erfolgt die Umsetzung bei einer Temperatur von 20 bis 180 °C.

Bevorzugt erfolgt die Umsetzung bei einem Gesamtdruck von 1 bis 100 bar.

Bevorzugt erfolgt die Umsetzung in einem Phosphinsäure-Olefin-Molverhältnis von 1:10000 bis 1:0.001.

Besonders bevorzugt erfolgt die Umsetzung in einem Phosphinsäure-Olefin-Molverhältnis von 1:30 bis 1:0.01.

Bevorzugt erfolgt die Umsetzung in einem Phosphinsäure-Katalysator-Molverhältnis von 1:1 bis 1:0.00000001.

Besonders bevorzugt erfolgt die Umsetzung in einem Phosphinsäure-Katalysator-Molverhältnis von 1:0.01 bis 1:0.000001.

Bevorzugt erfolgt die Umsetzung in einem Phosphinsäure-Lösungsmittel-Molverhältnis von 1:10000 bis 1:0.

Besonders bevorzugt erfolgt die Umsetzung in einem Phosphinsäure-Lösungsmittel-Molverhältnis von 1:50 bis 1:1.

Ein erfindungsgemäßes Verfahren zur Herstellung von Alkylphosphonigsäuren, -salzen und -estern, ist dadurch gekennzeichnet, dass man eine Phosphinsäurequelle mit Olefinen in Gegenwart eines Katalysators umsetzt und das Produkt (Alkylphosphonigsäure bzw. -salze, -ester) von Katalysator, Übergangsmetall bzw. Übergangsmetallverbindung, Ligand, Komplexbildner, Salzen und Nebenprodukten befreit wird.

Erfindungsgemäß wird das Lösungsmittel durch Destillation und/oder Extraktion abtrennt.

Erfindungsgemäß wird der Katalysator, das Katalysatorsystem, das Übergangsmetall und/oder die Übergangsmetallverbindung abtrennt durch Zugabe eines Hilfsmittels 1 und Entfernen des Katalysators, des Katalysatorsystems, des Übergangsmetalls und/oder der Übergangsmetallverbindung durch Extraktion und/oder Filtration.

Erfindungsgemäß wird der Katalysator, das Katalysatorsystem, das Übergangsmetall und/oder die Übergangsmetallverbindung durch Extraktion und/oder Filtration abtrennt.

Erfindungsgemäß wird der Ligand und/oder Komplexbildner durch Extraktion mit erfindungsgemäßen Hilfsmittel 2 und/oder Destillation mit erfindungsgemäßen Hilfsmittel 2 abtrennt.

Erfindungsgemäß werden die Hilfmittel durch Destillation und/oder Filtration und/oder Extraktion abtrennt.

Hilfsmittel 1 ist bevorzugt Wasser und/oder mindestens ein Vertreter der Familie der Metallfänger (Metal Scavenger). Bevorzugte Metallfänger sind Metalloxide wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur, Metallcarbonate wie etwa Bariumcarbonat, Calciumcarbonat, Strontiumcarbonat, Metallsulfate wie etwa, Bariumsulfat, Calciumsulfat, Strontiumsulfat, Metallphosphate wie etwa Aluminiumphosphat, Vanadiumphosphat, Metallcarbide wie etwa Siliconcarbid, Metallaluminate wie etwa Calciumaluminat, Metallsilikate wie etwa Aluminiumsilikat, Kreiden, Zeolithe, Bentonit, Montmorillonit, Hectorit, funktionalisierte Silikate, funktionalisierte Silikagele wie etwa SiliaBond^{®}, QuadraSil™, funktionalisierte Polysiloxane wie etwa Deloxan^{®}, Metallnitride, Kohle, Aktivkohle, Mullite, Bauxite, Antimonite, Scheelite, Perovskite, Hydrotalcite, funktionalisierte und unfunktionalisierte Cellulose, Chitosan, Keratin, Heteropolyanionen, Ionentauscher wie etwa Amberlite™, Amberjet™, Ambersep™, Dowex^{®}, Lewatit^{®}, ScavNet^{®}, funktionalisierte Polymere wie etwa Chelex^{®}, QuadraPure™, Smopex^{®}, PolyOrgs^{®}, polymergebundene Phosphane, Phosphanoxide, Phosphinate, Phosphonate, Phosphate, Amine, Ammoniumsalze, Amide, Thioamide, Harnstoffe, Thioharnstoffe, Triazine, Imidazole, Pyrazole, Pyridine, Pyrimidine, Pyrazine, Thiole, Thiolether, Thiolester, Alkohole, Alkoxide, Ether, Ester, Carbonsäuren, Acetate, Acetale, Peptide, Hetarene, Polyethylenimin/Siliciumdioxid und/oder Dendrimere.

Bevorzugt wird Hilfsmittel 1 in Mengen zugesetzt, die einer 0.1 - 40 gew.-%igen Beladung des Metalls auf dem Hilfsmittel 1 entsprechen.

Bevorzugt wird Hilfsmittel 1 bei Temperaturen von 20 - 90 °C eingesetzt.

Bevorzugt beträgt die Verweilzeit von Hilfsmittel 1 0.5 - 360 Minuten.

Hilfsmittel 2 ist bevorzugt das vorgenannte, erfindungsgemäße Lösungsmittel.

Bevorzugt unterscheidet sich die Aufarbeitung des Reaktionsgemischs je nach gewählter Reaktionsführung als Ein- oder Mehr-Phasen-System mit homogen und/oder heterogen wirkendem Katalysator und Löslichkeiten der Produkte und Edukte in dem gewählten Lösungsmittelsystem.

### Ein-Phasen-System

Ein heterogen wirkender Katalysator kann in der Suspension oder an eine stationäre Phase gebunden wirken.

Wirkt der heterogen wirkende Katalysator als Suspension, wird dieser vom Reaktionsgemisch filtriert und kann für weitere Umsetzungen wieder zu Verfügung gestellt werden. Die das Produkt (Alkylphosphigsäure) und/oder die Phosphinsäurequelle und/oder das Olefin enthaltende Phase wird der Isolierung des Produkts zugeführt.

Wirkt der heterogen wirkende Katalysator an eine stationäre Phase gebunden und ist das Produkt in der Phase löslich, wird die das Produkt und/oder die Phosphinsäurequelle und/oder das Olefin enthaltende Phase der Isolierung des Produkts zugeführt.

Wirkt der heterogen wirkende Katalysator an eine stationäre Phase gebunden und ist das Produkt in der Phase unlöslich, wird das Produkt von dem Lösungsmittelsystem filtriert. Die die Phosphinsäurequelle und das Olefin enthaltende Phase kann der Kreislaufführung unterzogen werden.

Bei Vorliegen eines homogen wirkenden Katalysators und gegebener Löslichkeit des Produkts in dem Lösungsmittelsystem wird der Katalysator und/oder das Element in seiner nullwertigen oder positiv gelagenden, ionischen Form nach Beendigung der Reaktion vom Reaktionsgemisch durch Kristallisation, Adsorption, Absorption, Fällung, Ionenaustausch, Destillation, Extraktion abgetrennt. Die das Produkt und/oder die Phosphinsäurequelle und/oder das Olefin enthaltende Phase wird der Isolierung des Produkts zugeführt.

Bei Vorliegen eines homogen wirkenden Katalysators und gegebener Unlöslichkeit des Produkts in dem Lösungsmittelsystem wird wird das Produkt von dem Lösungsmittelsystem filtriert. Die den Katalysator, die Phosphinsäurequelle und das Olefin enthaltende Phase kann der Kreislaufführung unterzogen werden.

### Mehr-Phasen-System

Ein Mehr-Phasen-System zeichnet sich durch eine geeignete Wahl eines Lösungsmittelsystems aus, gekennzeichnet dadurch, dass sich Produkt und Katalysator in unterschiedlichen Phasen befinden oder das Produkt sich in keiner der Phasen löst.

Löst sich das Produkt in keiner der Phasen, wird dieses von dem Lösungsmittelsystem filtriert. Die das Katalysatorsystem, die Phosphinsäurequelle und das Olefin enthaltende Phase(n) kann einer Kreislaufführung unterzogen werden.

Ist das Produkt in einer der Phasen löslich, kann die das Katalysatorsystem und/oder Phosphinsäurequelle und/oder Olefin enthaltende Phase(n) der Kreislaufführung unterzogen werden. Die das Produkt und/oder die Phosphinsäurequelle und/oder das Olefin enthaltende Phase(n) wird/werden der Isolierung des Produkts zugeführt.

Die Isolierung des Produkts und/oder des Olefins und/oder des Übergangsmetalls und/oder der Übergangsmetallverbindung und/oder Katalysatorsystems und/oder des Liganden und/oder der Phosphinsäurequelle erfolgt als Lösung in dem zuvor verwendeten Lösungsmittelsystem, durch Entfernen des Lösungsmittelsystems mittels Destillation oder Rektifikation, durch Kristallisation des Produktes und/oder Olefins und/oder der Phosphinsäurequelle in einem geeigneten Lösungsmittelsystem, durch Fällen des Produktes und/oder Olefins und/oder der Phosphinsäurequelle in einem geeigneten Lösungsmittelsystem, durch Filtration oder Zentrifugieren, Destillation, Rektifikation, Extraktion, Adsorption oder Chromatographie des Produktes und/oder Olefins und/oder der Phosphinsäurequelle.

Die Aufarbeitung und Isolierung des Produkts zeichnet sich dadurch aus, dass es sich aus mindestens einer oben genannter Methoden und/oder einer Kombination derer zusammensetzt.

In einer Ausgestaltung des Verfahrens kann der Einsatz der einzelnen Komponenten (Phosphinsäurequelle, Olefin, Katalysator, wahlweise Lösungsmittel, gasförmige Bestandteile) gleichzeitig oder in jeder erdenklichen Reihenfolge erfolgen, wobei die gewählte Reihenfolge einen Effekt auf die Ausbeute an Alkylphosphonigsäure zeigt.

Bevorzugt wird die Umsetzung geführt, in dem
a) der Katalysator in einem Lösungsmittel vorgelegt wird und aufeinanderfolgend Phosphinsäurequelle und Olefin hinzugefügt werden,
b) der Katalysator in einem Lösungsmittel vorgelegt wird und aufeinanderfolgend Olefin und Phosphinsäurequelle hinzugefügt werden,
c) der Katalysator vorglegt wird und aufeinanderfolgend Phosphinsäurequelle und Olefin hinzugefügt werden,
d) der Katalysator vorgelegt wird und aufeinanderfolgend Olefin und Phosphinsäurequelle hinzugefügt werden,
e) die Phosphinsäurequelle in einem Lösungsmittel vorgelegt wird und aufeinanderfolgend Katalysator und Olefin hinzugefügt werden,
f) die Phosphinsäurequelle in einem Lösungsmittel vorgelegt wird und aufeinanderfolgend Olefin und Katalysator hinzugefügt werden,
g) die Phosphinsäurequelle vorgelegt wird und aufeinanderfolgend Katalysator und Olefin hinzugefügt werden,
h) die Phosphinsäurequelle vorgelegt wird und aufeinanderfolgend Olefin und Katalysator hinzugefügt werden,
i) das Olefin in einem Lösungsmittel vorgelegt wird und aufeinanderfolgend Phosphinsäurequelle und Katalysator hinzugefügt werden,
j) das Olefin in einem Lösungsmittel vorgelegt wird und aufeinanderfolgend Katalysator und Phosphinsäurequelle hinzugefügt werden,
k) das Olefin vorgelegt wird und aufeinanderfolgend Phosphinsäurequelle und Katalysator hinzugefügt werden,
l) das Olefin vorgelegt wird und aufeinanderfolgend Katalysator und Phosphinsäurequelle hinzugefügt werden.

Die Verfahren a) bis l) ergeben gegenüber anderen denkbaren Kombinationen Vorteile in Form von höheren Ausbeuten und geringerer Menge an Oxidationsprodukten.

In Ausgestaltung des Verfahrens werden Olefin, Phosphinsäurequelle und Ligand in einem Lösungsmittel vorgelegt und das Übergangsmetall oder die Übergangsmetallverbindung hinzugefügt.

In Ausgestaltung des Verfahrens werden Olefin, Phosphinsäurequelle und Ligand vorgelegt und das Übergangsmetall oder die Übergangsmetallverbindung hinzugefügt.

In einer Ausgestaltung des Verfahrens kann der Katalysator vor der Umsetzung und/oder zu Beginn der Umsetzung in situ und/oder während der Umsetzung in situ generiert werden und als homogener und/oder heterogener Katalysator wirken.

In einer Ausgestaltung des Verfahrens kann die Umsetzung als Ein-Phasen-System in homogener oder heterogener Mischung und/oder in der Gasphase erfolgen.

In einer Ausgestaltung des Verfahrens kann ein Mehr-Phasen-System verwendet und zusätzlich ein Phasentransferkatalysor eingesetzt werden. Hierbei kann die das Katalysatorsystem enthaltende Phase(n) der Kreislaufführung unterzogen und die das Produkt enthaltende Phase(n) der Aufarbeitung zugeführt werden.

In einer Ausgestaltung des Verfahrens werden enantiomerenreine oder enantiomereangereicherte Alkylphosphonigsäuren und deren Derivate hergestellt. Hierzu sind chriale zweizähnige Liganden der allgemeinen Formel (IV) notwendig. Erfindungsgemäß bevorzugte Liganden sind beispielsweise (2S,2S)-(-)-Bis(diphenylphosphino)butan, (2R,2R)-(+)-Bis(diphenylphosphino)butan, (+)-1,2-Bis[(2R,5R)-2,5-diidopropylphospholano]benzol, (-)-1,2-Bis[(2S,5S)-2,5-diidopropylphospholano]benzol, (+)-2,3-O-Isopropropyliden-2,3-dihydroxy-1,4-bis(diphenylphosphino)butan, (-)-2,3-O-Isopropropyliden-2,3-dihydroxy-1,4-bis(diphenylphosphino)butan, (R)-(+)-2,2'-Bis(diphenylphosphino)-1,1'-binaphthyl, (S)-(-)-2,2'-Bis(diphenylphosphino)-1,1'-binaphthyln, (R)-(+)-2,2'-Bis(di-p-tolylphosphino)-1,1'-binaphthyl, (S)-(-)-2,2'-Bis(di-p-tolylphosphino)-1,1'-binaphthyl, (R)-(+)-7,7'-Bis[di(3,5-dimethylphenyl)phosphino]-2,2',3,3'-tetrahydro-1,1'-spirobiindan, (S)-(-)-7,7'-Bis[di(3,5-dimethylphenyl)phosphino]-2,2',3,3'-tetrahydro-1,1'-spirobiindan, 1,1'-Bis((2R,5R)-2,5-diethylphospholano)ferrocen, 1,1'-Bis((2S,5S)-2,5-diethylphospholano)ferrocen.

In einer bevorzugten Ausgestaltung des Verfahrens werden Phosphinsäure und/oder dessen Natriumsalz mit Ethylen in Gegenwart eines Katalysators in einem Lösungsmittel zu Ethylphosphonigsäure und/oder dem Natriumsalz als Hauptprodukt umgesetzt.

Bevorzugt erfolgt die Umsetzung in Absorptionskolonnen, Sprühtürmen, Blasensäulen, Rührkesseln, Strömumgsrohren und/oder Knetern.

Strömumgsrohre sind bevorzugt bei hetergogenen Katalysatoren.

Bevorzugt werden als Mischorgane Anker-, Blatt-, MIG-, Propeller-, Impeller-, Turbinen-, Kreuz-Rührer, Dispergierscheiben, Hohl-(Begasungs-)-Rührer, Rotor-Stator-Mischer, statische Mischer, Venturi-Düsen und/oder Mammutpumpen eingesetzt.

Bevorzugt erfährt die Reaktionslösung bei der Umsetzung eine Mischintensität, die einer Rotations-Reynolds-Zahl von 1 bis 1000000, bevorzugt von 100 bis 100000 entspricht.

Bevorzugt erfolgt eine intensive Durchmischung von Olefin, Katalysator, Lösungsmittelsystem und Hypophosphoriger Säure und/oder deren Salzen unter einem Energieeintrag von 0,080 bis 10 kW/m³, bevorzugt 0,30 - 1,65 kW/m³.

Bevorzugt weisen die erfindungsgemäßen Alkylphosphonigsäuren, -salzen und -ester und/oder Alkylphosphonigsäuren, -salzen und -ester die nach erfindungsgemäßem Verfahren hergestellt wurden, eine Säurezahl > 0,32 g KOH/g Alkylphosphonigsäure auf. Die hohe Säurezahl ist hierbei vorteilhaft für einen hohen Vernetzungsgrad bei duroplastischen Polymeren.

Bevorzugt ist die Verwendung der erfindungsgemäßen Alkylphosphonigsäuren, -salzen und -ester und/oder Alkylphosphonigsäuren, -salzen und -ester die nach erfindungsgemäßem Verfahren hergestellt wurden
- als Binder z. B. für Gießereimassen und Formsande.
- als Vernetzer bzw. Beschleuniger beim Aushärten von Epoxyharzen, Polyurethanen, ungesättigten Polyesterharzen.
- als Polymerstabilisatoren, z. B. als Lichtschutzstabilisator und/oder Thermostabilisatoren für Baumwollgewebe, Polymerfasern, Kunststoffe.
- als Pflanzenschutzmittel, z. B. als Pflanzenwachstumsregulator, als Herbizid, Pestizid, Fungizid.
- als Therapeutikum oder Additiv in Therapeutika für Menschen und Tiere, z. B. als Enzymmodulator, zur Stimulierung von Gewebewachstum.
- als Sequestrierungsmittel z. B. zur Kontrolle von Ablagerungen in industriellen Wasserleitungssystemen, bei der Mineralölgewinnung und in Metallbehandlungsmitteln.
- als Mineralöl-Additiv z. B. als Antioxidans und zur Erhöhung der Octanzahl.
- als Korrosionsschutzmittel.
- in Wasch- und Reinigungsmittelanwendungen, z. B. als Entfärbungsmittel.
- in Elektronikanwendungen z. B. in Polyelektrolyten für Kondensatoren, Batterien und Akkumulatoren, sowie als Radikalfänger in photosensitiven Schichten.
- als Vorstufe zur Herstellung von Alkylphosphonsäuren.

Bevorzugt ist die Verwendung der erfindungsgemäßen Alkylphosphonigsäuren, -salzen und -ester und/oder Alkylphosphonigsäuren, -salzen und -ester die nach erfindungsgemäßem Verfahren hergestellt wurden, zur Herstellung von flammgeschützten thermoplastischen Polymerformmassen.
Bevorzugt enthält die flammgeschützte thermoplastische Polymerformmasse 0,5 bis 45 Gew.-% erfindungsgemäße Alkylphosphonigsäure, -salz und -ester und/oder Alkylphosphonigsäure, -salz und -ester die nach erfindungsgemäßem Verfahren hergestellt wurden.

Bevorzugt enthält die flammgeschützte thermoplastische Polymerformmasse 0,5 bis 45 Gew.-% erfindungsgemäße Alkylphosphonigsäure, -salz und -ester und/oder Alkylphosphonigsäure, -salz und -ester die nach erfindungsgemäßem Verfahren hergestellt wurde, 0,5 bis 95 Gew.-% thermoplastisches Polymer oder Mischungen derselben, wobei die Summe der Komponenten 100 Gew.-% beträgt.

Bevorzugt enthält die flammgeschützte thermoplastische Polymerformmasse 10 bis 40 Gew.-% erfindungsgemäße Alkylphosphonigsäure, -salz und -ester und/oder Alkylphosphonigsäure, -salz und -ester die nach erfindungsgemäßem Verfahren hergestellt wurde, 10 bis 80 Gew.-% thermoplastisches Polymer oder Mischungen derselben, 2 bis 40 Gew.-% Additive,
2 bis 40 Gew.-% Füllstoff bzw. Verstärkungsmaterialien, wobei die Summe der Komponenten 100 Gew.-% beträgt.

Das Verfahren zur Herstellung von flammgeschützten thermoplastischen Polymerformmassen ist dadurch gekennzeichnet, dass die erfindungsgemäße Alkylphosphonigsäure, -salz und -ester und/oder Alkylphosphonigsäure, -salz und -ester die nach erfindungsgemäßem Verfahren hergestellt wurde, mit dem Polymergranulat und evtl. Additiven vermischt und auf einem DoppelschneckenExtruder (ZSK 25 WLE, 14,5 kg/h, 200 U/min, UD: 4) bei Temperaturen von 170 °C (Polystyrol), ca. 270 °C (PET, Polyethylenterephthalat), 230 bis 260 °C (Polybutylenterephthalat, PBT), von 260 °C (PA6) bzw. von 260 bis 280 °C (PA 66) eingearbeitet wird. Der homogenisierte Polymerstrang wird abgezogen, im Wasserbad gekühlt, anschließend granuliert und auf einen Restfeuchtegehalt von 0,05 bis 5 %, bevorzugt 0,1 bis 1 Gew.-% getrocknet.

Das Verfahren zur Herstellung einer flammgeschützten thermoplastischen Polymerformmasse ist dadurch gekennzeichnet, dass 1000 Gew.-teile Dimethylterephthalat und 720 Gew.-teile Ethylenglycol und 35 bis 700 Gew.-teile erfindungsgemäßer Alkylphosphonigsäure, -salz und -ester und/oder Alkylphosphonigsäure, -salz und -ester die nach erfindungsgemäßem Verfahren hergestellt wurde, polymerisiert werden. Wahlweise kann die Polymerisation in Gegenwart von Zinkacetat erfolgen. Wahlweise kann die flammgeschützten Polymerformmasse zu Fasern gesponnen werden.
Bevorzugt handelt es sich bei dem Polymer um ein thermoplastisches oder duroplastisches Polymer.

Bevorzugt handelt es sich bei den thermoplastischen Polymeren um Polymere von Mono- und Diolefinen, beispielsweise Polypropylen, Polyisobutylen, Polybuten-1, Poly-4-methylpenten-1, Polyisopren oder Polybutadien sowie Polymerisate von Cyclo-olefinen wie z. B. von Cyclopenten oder Norbornen; ferner Polyethylen (das ggf. vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den thermoplastischen Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den thermoplastischen Polymeren um Polystyrol, Poly-(p-methylstyrol) und/oder Poly-(alpha-methylstyrol).

Bevorzugt handelt es sich bei den thermoplastischen Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den thermoplastischen Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den thermoplastischen Polymeren um halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den thermoplastischen Polymeren um Polymere, die sich von alpha, beta -ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den thermoplastischen Polymeren um Polymere, die sich von ungesättigten Alkoholen und Aminen bzw. deren Acetalen oder Acylderivaten ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den thermoplastischen Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um thermoplastischen Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den thermoplastischen Polymeren um Polyphenylen-oxide und -sulfide und deren Mischungen mit Styrolpolymeren oder Polyamiden.

Bevorzugt handelt es sich bei den thermoplastischen Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den thermoplastischen Polymeren um Polyamide und Copolyamide, die sich von Diaminen und Dicarbonsäuren und/oder von Aminocarbonsäuren oder den entsprechenden Lactamen ableiten, wie Polyamid 4, Polyamid 6 (Akulon^{®} K122, DSM; Zytel^{®} 7301, Fa. DuPont; Durethan^{®} B 29, Fa. Bayer), Polyamid 6/6 (Zytel^{®} 101, Fa. DuPont; Durethan^{®}A30, Durethan^{®} AKV, Durethan^{®} AM, Fa. Bayer; Ultramid^{®} A3, Fa BASF) 6/10, 6/9, 6/12, 4/6, 12/12, Polyamid 11, Polyamid 12 (Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylenterephthal-amid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den thermoplastischen Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den thermoplastischen Polymeren um Polycarbonate, Polyestercarbonate, auch um Polysulfone, Polyethersulfone und Polyetherketone.

Bevorzugt handelt es sich bei den Polymeren um Mischungen (Polyblends) der vorgenannten Polymeren, wie z. B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugt ist die Verwendung der erfindungsgemäßen Alkylphosphonigsäure, -salz und -ester und/oder Alkylphosphonigsäure, -salz und -ester die nach erfindungsgemäßem Verfahren hergestellt wurde, zur Herstellung von flammgeschützten Polymer-Formkörpern, -Filmen, -Fäden und -Fasern.

Bevorzugt enthalten die flammgeschützten Polymer-Formkörper, -Filme, -Fäden und -Fasern 0,5 bis 45 Gew.-% erfindungsgemäße Alkylphosphonigsäure, -salz und -ester und/oder Alkylphosphonigsäure, -salz und -ester die nach erfindungsgemäßem Verfahren hergestellt wurde, und 0,5 bis 99,5 Gew.-% thermoplastisches Polymer oder Mischungen derselben.

Bevorzugt enthalten die flammgeschützten Polymer-Formkörper, -Filme, -Fäden und -Fasern 0,5 bis 45 Gew.-% erfindungsgemäße Alkylphosphonigsäure, -salz und -ester und/oder Alkylphosphonigsäure, -salz und -ester die nach erfindungsgemäßem Verfahren hergestellt wurde, 0,5 bis 98,5 Gew.-% thermoplastisches Polymer oder Mischungen derselben, 0,5 bis 55 Gew.-% Additive und 0,5 bis 55 Gew.-% Füllstoff bzw. Verstärkungsmaterialien.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z. B. Spritzgießmaschine (Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Das Verfahren zur Herstellung von flammgeschützten Polymer-Formkörpern ist dadurch gekennzeichnet, dass die erfindungsgemäße flammgeschützte Formmasse bei geeigneten Massetemperaturen zu Polymer-Formkörpern verarbeitet wird.

Geeignete bevorzugte Massetemperaturen sind bei Polystyrol 200 bis 250 °C, bei Polypropylen 200 bis 300 °C, bei Polyethylenterephthalat (PET) 250 bis 290 °C, bei Polybutylenterephthalat (PBT) 230 bis 270 °C, bei Polyamid 6 (PA 6) 260 bis 290 °C, bei Polyamid 6.6 (PA 6.6) 6.6 260 bis 290 °C, bei Polycarbonat 280 bis 320 °C.

Bevorzugt handelt es sich bei den duroplastischen Polymeren um ungesättigte Polyesterharze, die sich von Copolyestern gesättigter und ungesättigter Dicarbonsäuren oder deren Anhydriden mit mehrwertigen Alkoholen, sowie Vinylverbindungen als Vernetzungsmittel ableiten. UP-Harze werden gehärtet durch radikalische Polymerisation mit Initiatoren (z. B. Peroxiden) und Beschleunigern.

Bevorzugte ungesättigte Dicarbonsäuren und -derivate zur Herstellung der Polyester sind Maleinsäureanhydrid und Fumarsäure.

Bevorzugte gesättigte Dicarbonsäuren sind Phthalsäure, Isophthalsäure, Terephthalsäure, Tetrahydrophthalsäure, Adipinsäure.

Bevorzugte Diole sind 1,2 Propandiol, Ethylenglycol, Diethylenglycol und Neopentylglycol, Neopentylglycol, ethoxyliertes oder propoxyliertes Bisphenol A.

Bevorzugte Vinylverbindung zur Vernetzung ist Styrol.

Bevorzugte Härtersysteme sind Peroxide und Metallcoinitiatoren z. B. Hydroperoxide und Cobaltoctanoat und/oder Benzoylperoxid und Aromatische Amine und/oder UV-Licht und Photosensibilisatoren z. B. Benzoinether.

Bevorzugte Hydroperoxide sind Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid, Dicyclohexylperoxiddicarbonat.

Bevorzugt werden Initiatoren in Mengen von 0,1 bis 20 Gew. -%, vorzugsweise 0,2 bis 15 Gew.-%, berechnet auf die Masse aller Comonomeren, eingesetzt. Bevorzugte Metallcoinitiatoren sind Kobalt-, Mangan-, Eisen-, Vanadium -, Nickel- oder Bleiverbindungen. Bevorzugt werden Metallcoinitiatoren in Mengen von 0.05 bis 1 Gew.-%, berechnet auf die Masse aller Comonomeren, eingesetzt.

Bevorzugte aromatische Amine sind Dimethylanilin, Dimethyl-p-toluol, Diethylanilin und Phenyldiethanolamine.

Ein Verfahren zur Herstellung von flammgeschützten Copolymerisaten ist dadurch gekennzeichnet, dass man (A) mindestens ein ethylenisch ungesättigtes Dicarbonsäureanhydrid, abgeleitet von mindestens einer C₄-C₈-Dicarbonsäure, (B) mindestens eine vinylaromatische Verbindung und (C) ein Polyol copolymerisiert, (D) mit erfindungsgemäßer Alkylphosphonigsäure, -salz und -ester und/oder Alkylphosphonigsäure, -salz und -ester die nach erfindungsgemäßem Verfahren hergestellt wurde, umsetzt.

Ein Verfahren zur Herstellung von flammwidrigen duroplastischen Massen ist dadurch gekennzeichnet, dass man ein duroplastisches Harz mit einer Flammschutzkomponente aus erfindungsgemäßer Alkylphosphonigsäure, -salz und -ester und/oder Alkylphosphonigsäure, -salz und -ester die nach erfindungsgemäßem Verfahren hergestellt wurde, vermischt und die resultierende Mischung bei Drücken von 3 bis 10 bar und Temperaturen von 20 bis 60 °C nass presst (Kaltpressung).

Ein Verfahren zur Herstellung von flammwidrigen duroplastischen Massen ist dadurch gekennzeichnet, dass man ein duroplastisches Harz mit erfindungsgemäßer Alkylphosphonigsäure, -salz und -ester und/oder Alkylphosphonigsäure, -salz und -ester die nach erfindungsgemäßem Verfahren hergestellt wurde, vermischt und die resultierende Mischung bei Drücken von 3 bis 10 bar und Temperaturen von 80 bis 150 °C nass presst (Warm- oder Heisspressung).

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-di-glycidylethern, die mittels üblichen Härtern und/oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind Polyamine wie Diethylenetriamin Triethylentetramin, Aminoethylpiperazin, Isophorondiamin, Polyamidoamin, Diaminodiphenylmethan, Diaminodiphenolsulfone und Dicyandiamid.
Geeignete Härter sind mehrbasige Säuren oder deren Anhydride wie z. B. Phthalsäureanhydrid, Maleinsäureanhydrid, Tetrahydrophthalsäureanhydrid, Methyltetrahydrophthalsäureanhydrid, Hexahydrophthalsäureanhydrid und Methylhexahydrophthalsäureanhydrid,

Geeignete Härter sind Phenole wie z. B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl Harz, Biphenol-modifiziertes Phenolaralkyl-Harz, Phenoltrimethylolmethan-Harz, Tetraphenylolethan-Harz, Naphthol-Novolak-Harz, Naphthol-Phenol-Kocondensat-Harz, Naphthol-Cresol-Kocondensat-Harz, Biphenol- modifiziertes Phenol-Harz und Aminotriazin- modifiziertes Phenol-Harz.

Diese Härter können alleine oder in Kombination miteinander eingesetzt werden.

Geeignete Katalysatoren bzw. Beschleuniger für die Vernetzung bei der Polymerisation sind tertiäre Amine, Benzyldimethylamin, N-Alkylpyridine, Imidazol, 1-Methylimid-azol, 2-Methylimidazol, 2-Ethyl-4-methylimidazol, 2-Ethyl-4-methylimidazol, 2-Phenylimidazol, 2-Heptadecylimidazol, Metallsalze organischer Säuren, Lewis Säuren und Amin-Komplex-Salze.

Epoxidharze sind geeignet zum Verguss von elektrischen bzw. elektronischen Bauteilen und für Tränk- und Imprägnierprozesse. In der Elektrotechnik werden die verwendeten Epoxidharze überwiegend flammwidrig ausgerüstet und für Leiterplatten und Isolatoren eingesetzt.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Die Erfindung betrifft auch eine flammgeschützte Polyurethan-Formmasse, hergestellt durch Reaktion von 0,1 bis 50 Gew.-Teilen erfindungsgemäßer Alkylphosphonigsäure, -salz und -ester und/oder Alkylphosphonigsäure, -salz und -ester die nach erfindungsgemäßem Verfahren hergestellt wurde, mit 30 bis 65 Gew.-Teilen Polyisocyanat und 30 bis 65 Gew.-Teilen Polyol.

Das Verfahren zur Herstellung einer flammgeschützten Polyurethan-Formmasse ist dadurch gekennzeichnet, dass 170 bis 70 Gewichtsteile, bevorzugt 130 bis 80 Gew.-Teile, Polyisocyanate mit 100 Gew.-Teilen Polyol, 0,1 bis 50 Gew.-Teilen erfindungsgemäßer Alkylphosphonigsäure, -salz und -ester und/oder Alkylphosphonigsäure, -salz und -ester die nach erfindungsgemäßem Verfahren hergestellt wurde, und 0,1 bis 4 Gew.-Teilen, besonders bevorzugt 1 bis 2 Gew.-Teile, Katalysator zur Reaktion gebracht werden und wahlweise mit 0,1 bis 1,8 Gew.-Teilen, vorzugsweise 0,3 bis 1,6 Gew.-Teilen Treibmittel aufgeschäumt werden.

Bevorzugte Polyole, sind Alkenoxidaddukte von Ethylenglykol, 1,2-Propandiol, Bisphenol A, Trimethylolpropan, Glycerin, Pentaerythrol, Sorbit, Zucker, abgebaute Stärke, Ethylendiamin, Diaminotoluol und/oder Anilin, die als ein Initiator dienen. Die bevorzugten Oxyalkylierungsmittel, enthalten bevorzugt von 2 bis 4 Kohlenstoffatome besonders bevorzugt sind es Ethylenoxid und Propylenoxid.

Bevorzugte Polyester-Polyole werden durch Polykondensation eines Polyalkoholes wie Ethylenglykol, Diäthylenglykol, Propylenglykol, 1,4-Butanediol, 1,5-Pentandiol, Methylpentandiol, 1,6-Hexanediol, Trimethylolpropan, Glycerin, Pentaerythritol, Diglycerol, Traubenzucker und/oder Sorbit, mit einer dibasischen Säure wie Oxalsäure, Malonsäure, Bernsteinsäure, Weinsäure, Adipinsäure, Sebacinsäure, Maleinsäure, Fumarsäure, Phthalsäure, Terephthalsäure erhalten. Diese Polyester-Polyole können alleine oder in Komination benutzt werden.

Geeignete Polyisocyanate sind aromatische, alicyclische or aliphatische Polyisocyanate, mit nicht weniger als zwei Isocyanat-Groupen und Mischungen davon. Bevorzugt sind aromatische Polyisocyanate wie Tolyldiisocyanat, Methylendiphenyldiisocyanat, Naphthylendiisocyanate, Xylylendiisocyanat, Tris/4-isocyanatophenyl)methan und Polymethylenepolyphenylendiisocyanate; alicyclische Polyisocyanate sind Methylendiphenyldiisocyanat, Tolyldiisocyanat und; aliphatische Polyisocyanate sind Hexamethylendiisocyanat, Isophorendiisocyanat, Demeryldiisocyanat, 1,1-Methylenbis(4-isocyanatocyclohexan-4,4'-Diisocyanatodicyclohexylmethan-Isomerengemisch, 1,4-Cyclohexyldiisocyanat, Desmodur^{®}-Typen (Bayer) und Lysindiisocyanat und Mischungen davon.

Geeignete Polyisocyanate sind modifizierte Produkte, die durch Reaktion von Polyisocyanat mit Polyol, Harnstoff, Carbodiimid und/oder Biuret erhalten werden. Geeignete Katalysatoren sind starke Basen, Alkalimetalsalze von Carbonsäuren oder aliphatische tertiäre Amine. Bevorzugt sind quaternäres Ammoniumhydroxid, Alkalimetalhydroxid oder Alkoxid, Natrium oder Kaliumacetat, Kaliumoctoat, Natriumbenzoat, 1,4-diazabicyclo[2.2.2]octan, N,N,N',N'-Tetramethylhexamethylendiamin, N,N,N',N'-Tetramethylpropylenediamin, N,N,N',N',N"-Pentamethyldiethylen-triamin, N,N'-Di-(C₁-C₂)-alkylpiperazin, Trimethylaminoethylpiperazin, N,N-Dimethylcyclohexylamin, N,N-Dimethylbenzylamin, N-Methylmorpholin, N-Ethylmorpholin, Trimethylamin, Triethylamin, Tributylamin, Triethylenediamin, Bis(dimethylamino-ealkyl)piperazine, N,N,N',N'-tetramethylethylendiamin, N,N-Diethylbenzylamin, Bis(N,N-diethylaminoethyl)adipat, N,N,N',N'-Tetramethyl-1,3-butanediamin, N,N-Diethyl-[beta]-phenylethylamin, 1,2-Dimethylimidazol, 2-Methylimidazol usw.

Bevorzugt ist das Gewichtverhältnis des Polyisocyanats zu Polyol 170 zu 70, vorzugsweise 130 zu 80 bezogen auf 100 Gewicht-Teile des Polyols.

Bevorzugt ist das Gewichtverhältnis des Katalysators 0,1 bis 4 Gew.-Teile, besonders bevorzugt 1 bis 2 Gew.-Teile bezogen auf 100 Gew.-Teile des Polyols.

Bevorzugte Treibmittel sind Wasser, Kohlenwasserstoffe,
Fluorchlorkohlenwasserstoff, Fluorokohlenwasserstoff etc. Die Menge des Blähmittel ist 0,1 bis 1,8 Gewichtsteile, vorzugsweise 0,3 bis 1,6 Gewichtsteileund insbesondere 0,8 bis 1,6 Gewichtsteile bezogen auf 100 Gewichtsteile des Polyols.

### Beispiele

### Beispiel 1: (Vergleich)

Bei Raumtemperatur werden in einem Dreihalskolben mit Rührer und Intensivkühler 5852 g Tetrahydrofuran vorgelegt und unter Rühren und 10-minütigem Durchleiten von Stickstoff "entgast". Im Anschluss werden 70,0 mg Tris(dibenzyliden-aceton)dipalladium und 95,0 mg 4,5-Bis(diphenylphosphino)-9,9-dimethylxanthen hinzugegeben und weitere 15 Minuten unter Durchleiten von Stickstoff gerührt. Unter Rühren erfolgt nun die Zugabe der
198 g Phosphinsäure in 198 g Wasser. Weitere 10 Minuten wird Stickstoff durch das Reaktionsgemisch geleitet.
Die Reaktionslösung wird nun unter Stickstoffgegenstrom in den unter Stickstoffatmosphäre stehenden 2 l-Büchi-Reaktor überführt und der Dreihalskolben 2-mal mit wenig Tetrahydrofuran nachgespült. Unter Rühren des Reaktionsgemisches (Umdrehungszahl Rührer ca. 1400 Upm) wird der Reaktor mit 2,5 bar Ethylen beschickt und das Reaktionsgemisch auf 80 °C (Manteltemperatur) geheizt. Nach einer Ethylenaufnahme von 56 g wird auf Raumtemperatur abgekühlt und freies Ethylen unter Verbrennung abgelassen. Das Reaktionsgemisch wird nun am Rotationsverdampfer bei maximal 60 °C und 350-10 mbar vom Lösungsmittel befreit. Der Rückstand wird mit 300 g VE-Wasser (1fache Menge der theoretischen Ausbeute) versetzt und 1 Stunde bei Raumtemperatur unter Stickstoffatmosphäre gerührt. Der entstandene Rückstand wird filtriert und das Filtrat mit 200 ml Toluol extrahiert. Die wässrige Phase wird am Rotationsverdampfer bei maximal 60 °C und 250-10 mbar vom Lösungsmittel befreit.
31P-NMR(D2O, gekoppelt): Dublet von Multiplet, 36.7 ppm

### Beispiel 2:

Wie in Beispiel 1 werden 198 g Phosphinsäure, 365 g Tetrahydrofuran, 198 g Wasser, 84 g Ethylen, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 3:

Wie in Beispiel 1 werden 198 Phosphinsäure, 365 g Tetrahydrofuran, 198 g Wasser, 84 g Ethylen, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 4:

Wie in Beispiel 1 werden 198 g Phosphinsäure, 365 g Tetrahydrofuran, 198 g Wasser, 84 g Ethylen, 1. mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 5:

Wie in Beispiel 1 werden 198 g Phosphinsäure, 365g Tetrahydrofuran, 198 g Wasser, 84 g Ethylen, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 6:

Wie in Beispiel 1 werden 198 g Phosphinsäure, 365 g Tetrahydrofuran, 198 g Wasser, 84 g Ethylen, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 7:

Wie in Beispiel 1 werden 198 g Phosphinsäure, 365 g Tetrahydrofuran, 198 g Wasser, 84 g Ethylen, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 8:

Wie in Beispiel 1 werden 198 g Phosphinsäure, 365 g Tetrahydrofuran, 198 g Wasser, 84 g Ethylen, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 9:

Wie in Beispiel 1 werden 1.98g Phosphinsäure, 3.65g Tetrahydrofuran, 1.98 g Wasser, 0.84g Ethylen, 13.7g Tris(dibenzylidenaceton)dipalladium, 19.1 g 4,5-Bis(diphenylphosphino)-9,9-dimethylxanthen umgesetzt. Die genauen Bedingungen und Ausbeuten sind in Tabelle 1 aufgeführt.

### Beispiel 10:

Wie in Beispiel 1 werden 198 g Phosphinsäure, 365 g Tetrahydrofuran, 198 g Wasser, 84 g Ethylen, 1.4 g Tris(dibenzylidenaceton)dipalladium, 1.9 g 4,5-Bis(diphenylphosphino)-9,9-dimethylxanthen umgesetzt. Die genauen Bedingungen und Ausbeuten sind in Tabelle 1 aufgeführt.

### Beispiel 11:

Wie in Beispiel 1 werden 19 8g Phosphinsäure, 365 g Tetrahydrofuran, 198 g Wasser, 84 g Ethylen, 0.014 mg Tris(dibenzylidenaceton)dipalladium, 0.019 mg 4,5-Bis(diphenylphosphino)-9,9-dimethylxanthen umgesetzt. Die genauen Bedingungen und Ausbeuten sind in Tabelle 1 aufgeführt.

### Beispiel 12:

Wie in Beispiel 1 werden 198 g Phosphinsäure, 365 g Tetrahydrofuran, 198 g Wasser, 84 g Ethylen, 1.4 mg Tris(dibenzylidenaceton)dipalladium, 1.9 mg 4,5-Bis(diphenylphosphino)-9,9-dimethylxanthen s umgesetzt. Die genauen Bedingungen und Ausbeuten sind in Tabelle 1 aufgeführt.

### Beispiel 13:

Wie in Beispiel 1 werden 198 g Phosphinsäure, 365 g Tetrahydrofuran, 198 g Wasser, 84 g Ethylen, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 14:

Wie in Beispiel 1 werden 198 g Phosphinsäure, 365 g Tetrahydrofuran, 198 g Wasser, 84 g Ethylen, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 15:

Wie in Beispiel 1 werden 198 g Phosphinsäure, 563 g Wasser, 84 g Ethylen, 0.6 mg Palladium(II)sulfat, 6.8 mg Tris(3-sulfophenyl)phosphin Trinatriumsalz umgesetzt. Die genauen Bedingungen und Ausbeuten sind in Tabelle 1 aufgeführt.

### Beispiel 16:

Wie in Beispiel 1 werden 198 g Phosphinsäure, 563 g Essigsäure, 84 g Ethylen, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 17:

Wie in Beispiel 1 werden 198 g Phosphinsäure, 365 g Toluol, 198 g Wasser, 84 g Ethylen, 1.4 mg Tris(dibenzylidenaceton)dipalladium,
1.9 mg 4,5-Bis(diphenylphosphino)-9,9-dimethylxanthen umgesetzt. Die genauen Bedingungen und Ausbeuten sind in Tabelle 1 aufgeführt.

### Beispiel 18:

Wie in Beispiel 1 werden 198 g Phosphinsäure, 563 g Butanol, 84 g Ethylen, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 19:

Wie in Beispiel 1 werden 198 g Phosphinsäure, 84 g Ethylen,
1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 20:

Wie in Beispiel 1 werden 198 g Phosphinsäure, 365 g Tetrahydrofuran, 198 g Wasser, 252 g Hexen, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 21:

Wie in Beispiel 1 werden 198 g Phosphinsäure, 365 g Tetrahydrofuran, 198 g Wasser, 312 g Styrol, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 22:

Wie in Beispiel 3 werden 198 g Phosphinsäure, 365 g Tetrahydrofuran, 198 g Wasser, 81 g Butadien, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 23:

Wie in Beispiel 1 werden 198 g Phosphinsäure, 365 Tetrahydrofuran, 198 g Wasser, 216 g Acrylsäure, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 24:

Wie in Beispiel 1 werden 198 g Phosphinsäure, 365 g Tetrahydrofuran, 198 g Wasser, 258 g Vinyacetat, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 25:

Wie in Beispiel 1 werden 198 g Phosphinsäure, 365 g Tetrahydrofuran, 198 g Wasser, 171 g Allylamin, 1.4 mg Tris(dibenzylidenaceton)dipalladium, 1.9 mg 4,5-Bis(diphenylphosphino)-9,9-dimethylxanthen umgesetzt. Die genauen Bedingungen und Ausbeuten sind in Tabelle 1 aufgeführt.

### Beispiel 26:

Wie in Beispiel 1 werden 198 g Phosphinsäure, 365 g Tetrahydrofuran, 198 g Wasser, 84 g Ethylen, 1.7 mg Bis(dibenzylidenaceton)palladium, 1.2 mg 1,3-Bis(diphenylphosphino)propan umgesetzt. Die genauen Bedingungen und Ausbeuten sind in Tabelle 1 aufgeführt.

### Beispiel 27:

Wie in Beispiel 1 werden 198 g Phosphinsäure, 365 g Tetrahydrofuran, 198 g Wasser, 84 g Ethylen, 3.5 mg Tetrakis(triphenylphosphin)palladium, 1.7 mg 4,6-Bis(diphenylphosphin)phenoxazin umgesetzt. Die genauen Bedingungen und Ausbeuten sind in Tabelle 1 aufgeführt.

### Beispiel 28:

Wie in Beispiel 1 werden 198 g Phosphinsäure, 365 g Tetrahydrofuran, 198 g Wasser, 84 g Ethylen, 3.2 mg Palladium auf Kohle, 1.6 mg Triphenylphosphin umgesetzt. Die genauen Bedingungen und Ausbeuten sind in Tabelle 1 aufgeführt.

### Beispiel 29:

Wie in Beispiel 1 werden 198 g Phosphinsäure, 365 g Tetrahydrofuran, 198 g Wasser, 84 g Ethylen, 0.6 mg Palladium(II)sulfat, 2.0 mg Triphenylphosphin gebunden an Polystyrol umgesetzt. Die genauen Bedingungen und Ausbeuten sind in Tabelle 1 aufgeführt.

### Beispiel 30:

Wie in Beispiel 1 werden 198 g Phosphinsäure, 365 g Tetrahydrofuran, 198 g Wasser, 84 g Ethylen, 0.7 mg Palladium(II)acetat, 2.1 mg (Oxy-2,1-phenylen)-bis(diphenylphosphin) umgesetzt. Die genauen Bedingungen und Ausbeuten sind in Tabelle 1 aufgeführt.

### Beispiel 31:

Wie in Beispiel 1 werden 198 g Phosphinsäure, 365 g Tetrahydrofuran, 198 g Wasser, 84 g Ethylen, 3.7 mg Tetrakis(triphenylphosphin)platin, 2.1 mg (R)-(+)-2,2'-Bis(diphenylphosphino)-1,1'binaphthalen umgesetzt. Die genauen Bedingungen und Ausbeuten sind in Tabelle 1 aufgeführt.

### Beispiel 32:

Wie in Beispiel 1 werden 198 g Phosphinsäure, 365 Tetrahydrofuran, 198 g Wasser, 84 g Ethylen, 11.7 mg Platin auf Alumina, 2.4 mg 1,2-Bis(diphenylphosphino)ethan umgesetzt. Die genauen Bedingungen und Ausbeuten sind in Tabelle 1 aufgeführt.

### Beispiel 33:

Wie in Beispiel 1 werden 198 g Phosphinsäure, 365 g Tetrahydrofuran, 198 g Wasser, 84 g Ethylen, 0.4 mg Nickeldichlorid, 1.7 mg 4,5-Bis(diphenylphosphino)-9,9-dimethylxanthen umgesetzt. Die genauen Bedingungen und Ausbeuten sind in Tabelle 1 aufgeführt.

### Beispiel 34:

Wie in Beispiel 1 werden 198 g Phosphinsäure, 365 g Tetrahydrofuran, 198 g Wasser, 84 g Ethylen, 3.3 mg Tetrakis(triphenylphosphin)nickel, 1.7 mg 1,1'-Bis(diphenylphosphino)ferrocen umgesetzt. Die genauen Bedingungen und Ausbeuten sind in Tabelle 1 aufgeführt.

### Beispiel 35:

Wie in Beispiel 1 werden 198 g Phosphinsäure Natriumsalz, 563 g Essigsäure, 84 g Ethylen, 0.9 mg Tris(dibenzylidenaceton)dipalladium,
1.2 mg 4,5-Bis(diphenylphosphino)-9,9-dimethylxanthen umgesetzt. Die genauen Bedingungen und Ausbeuten sind in Tabelle 1 aufgeführt.

### Beispiel 36:

Wie in Beispiel 1 werden 198 g Phosphinsäurebutylester, 365 g Tetrahydrofuran, 198 g Wasser, 84 g Ethylen, 0.7 mg Tris(dibenzylidenaceton)dipalladium,
0.9 mg 4,5-Bis(diphenylphosphino)-9,9-dimethylxanthen umgesetzt. Die genauen Bedingungen und Ausbeuten sind in Tabelle 1 aufgeführt.

### Beispiel 37:

Wie in Beispiel 1 werden 198 g Ammoniumhypophosphit, 365 g Tetrahydrofuran, 198 g Wasser, 84 g Ethylen, 1.1 mg Tris(dibenzylidenaceton)dipalladium,
1.5 mg 4,5-Bis(diphenylphosphino)-9,9-dimethylxanthen umgesetzt. Die genauen Bedingungen und Ausbeuten sind in Tabelle 1 aufgeführt.

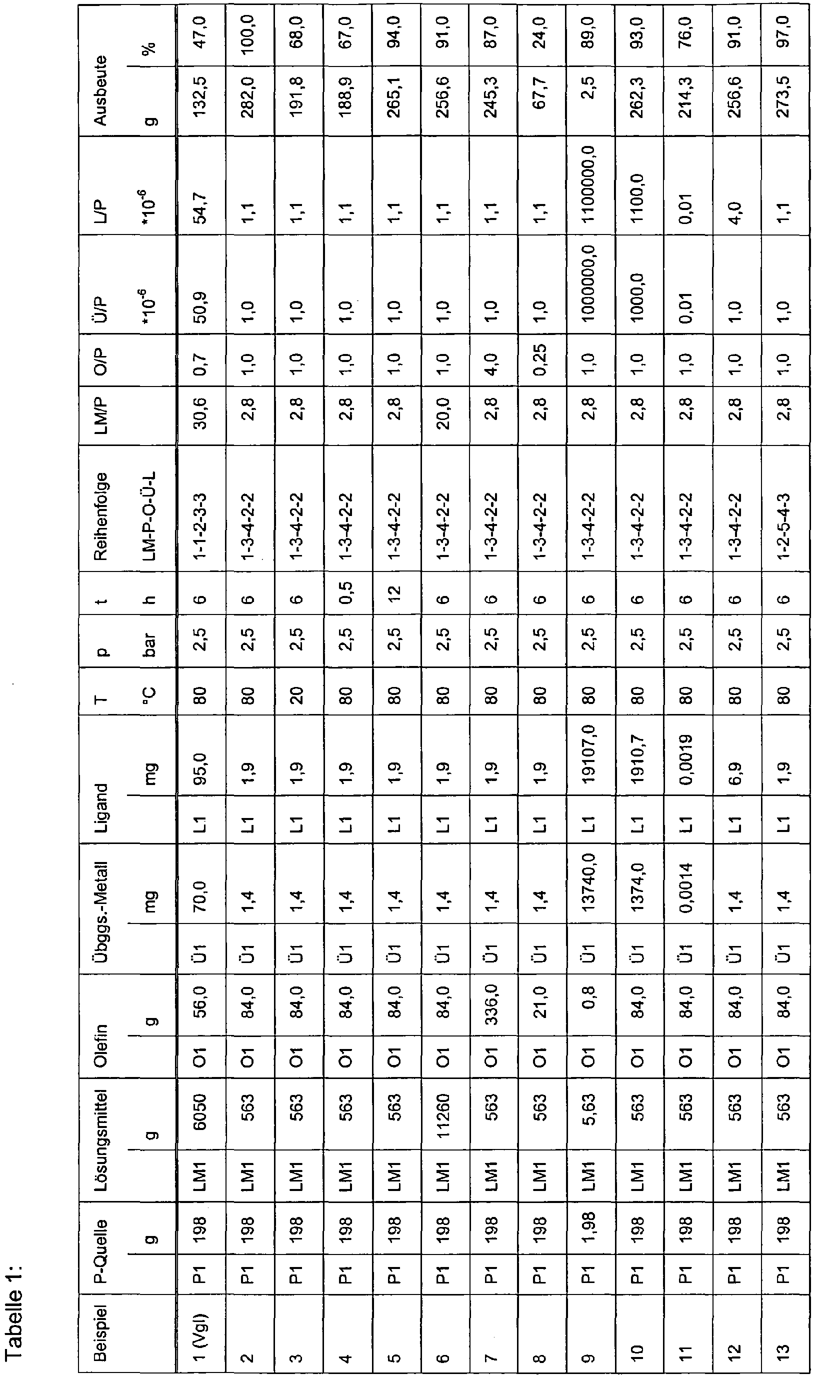

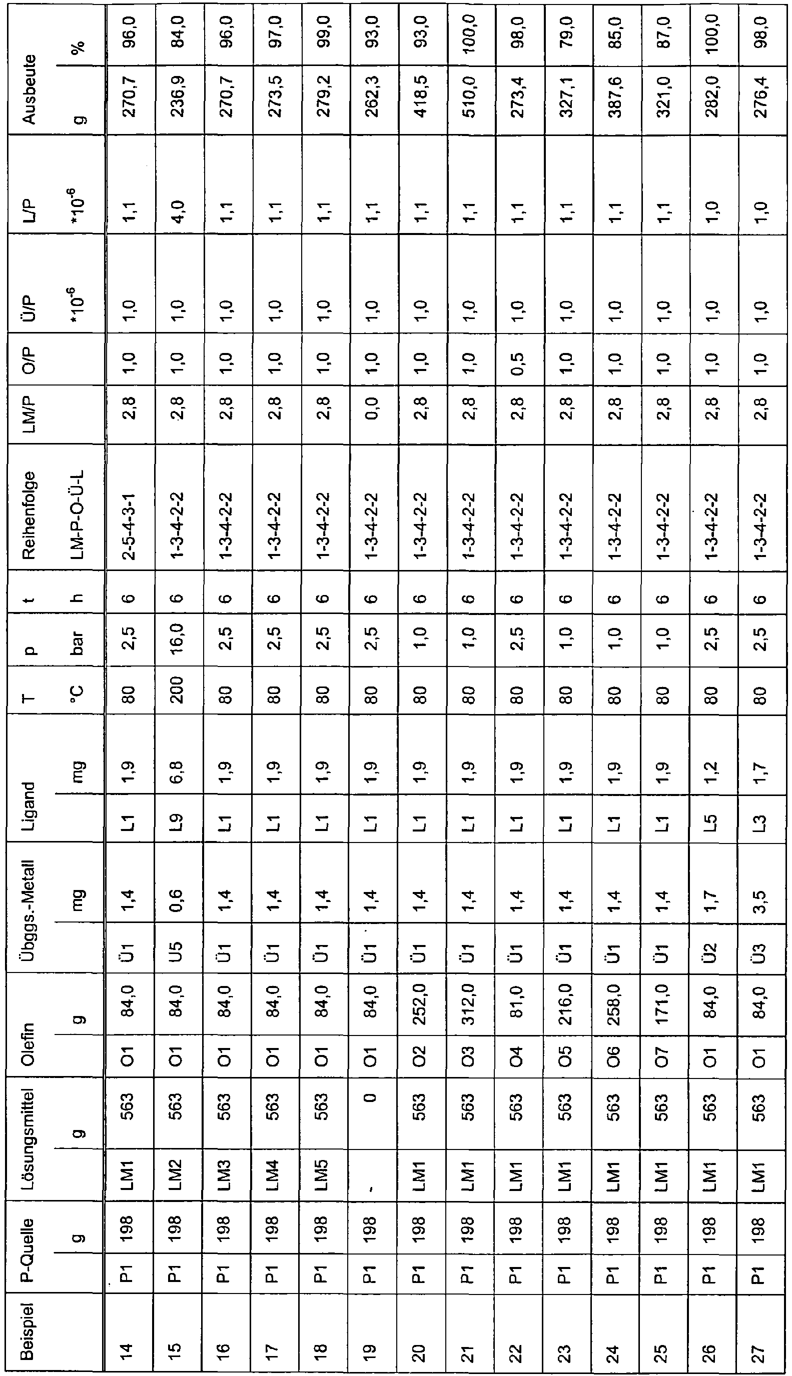

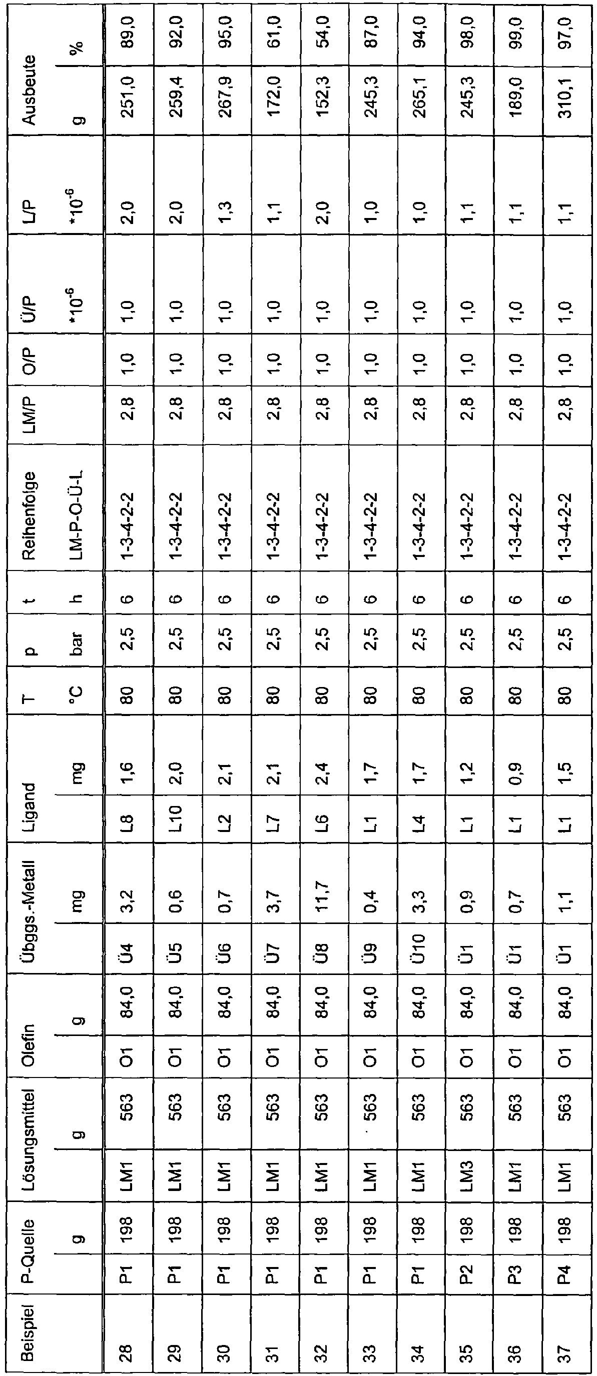

**Tabelle 2:**

| P-Quelle P | | Lösungsmittel LM | | Olefin O | | Übergansgmetall Ü | | Ligand L | |
|---|---|---|---|---|---|---|---|---|---|
| P1 | Phosphinsäure | LM1 | Wasser/Tetrahydrofuran | O1 | Ethylen | Ü1 | Tris(dibenzylidenaceton)-dipalladium | L1 | 4,5-Bis(diphenylphosphino)-9,9-dimethylxanthen |
| P2 | Phosphinsäure Natriumsalz | LM2 | Wasser | O2 | Hexen | Ü2 | Bis(dibenzylidenaceton) palladium | L2 | (Oxy-2,1-phenylen)-bis(diphenylphosphin) |
| P3 | Phosphinsäurebutylester | LM3 | Essigsäure | O3 | Styrol | Ü3 | Tetrakis(triphenylphos-phin)palladium | L3 | 4,6-Bis(diphenylphosphin)phenoxazin |
| P4 | Phosphinsäure Ammoniumsalz | LM4 | Wasser/Toluol | O4 | Butadien | Ü4 | Palladium auf Kohle | L4 | 1,1'-Bis(diphenylphosphino)ferrocen |
| | | LM5 | Butanol | O5 | Acrylsäure | Ü5 | Palladium(II)sulfat | L5 | 1,3-Bis(diphenylphosphino)propan |
| | | | | O6 | Vinylacetat | Ü6 | Palladium(II)acetat | L6 | 1,2-Bis(diphenylphosphino)ethan |
| | | | | O7 | Allylamin | Ü7 | Tetrakis(triphenylphosphin)platin | L7 | (R)-(+)-2,2'-Bis(diphenylphosphino)-1,1'binaphthalen |
| | | | | | | Ü8 | Platin auf Alumina | L8 | Triphenylphosphin |
| | | | | | | Ü9 | Nickeldichlorid | L9 | Tris(3-sulfophenyl)phosphin Trinatriumsalz |
| | | | | | | Ü10 | Tetrakis(triphenylphosphin)nickel | L10 | Triphenylphosphin gebunden an Polystyrol |

**Tabelle 3:**

| Beispiel | Produkt |
|---|---|
| 1 - 19; 26 - 34 | Ethylphosphonigsäure |
| 20 | 1-Hexylphopsphonigsäure |
| 21 | 2-Phenylethylphosphonigsäure |
| 22 | 1,4-Butandiphosphonigsäure |
| 23 | 3-Carboxyethylphosphonigsäure |
| 24 | 2-Acetatoethylphosphonigsäure |
| 25 | 3-Aminopropylphosphonigsäure |
| 35 | Ethylphosphonigsäure Natriumsalz |
| 36 | Ethylphosphonigsäurebutylester |
| 37 | Ethylphosphonigsäure Ammoniumsalz |

## Patentansprüche

1. Verfahren zur Herstellung von Alkylphosphonigsäuren, -salzen und -estern, **dadurch gekennzeichnet, dass** man eine Phosphinsäurequelle mit Olefinen in Gegenwart eines Katalysators umsetzt, wobei die Olefine der allgemeinen Formel (II) entsprechen,
R¹R²C=CR³R⁴ (II)
in der R¹ bis R⁴ gleich oder verschieden sind und für Wasserstoff, eine Alkylgruppe mit 1 bis 18 Kohlenstoffatomen und/oder eine Alkenylgruppe mit 2 bis 18 Kohlenstoffatomen und/oder für Arylgruppe mit 8 bis 18 Kohlenstoffatomen und/oder funktionelle Gruppen wie Carbonyl-, Aldehyd-, Carboxy-, Hydroxy-, Sulfonsäure-, Nitril-, Cyano- und/oder Epoxygruppen; für primäre, sekundäre und/oder tertiäre Aminogruppen und/oder Ester oder Ethergruppen stehen, und wobei es sich bei dem Katalysator um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und wobei es sich bei der Phosphinsäurequelle um Phosphinsäure (hypophosphorige Säure H₃PO₂), ein Salz der Phosphinsäure, einen Ester der Phosphinsäure oder um Mischungen davon handelt, und unlösliches Produkt abfiltriert.

2. Verfahren nach Anspruch 1, **dadurch gekennzeichnet, dass** es sich beim Salz der Phosphinsäure um Alkalisalze, Erdalkalisalze, Salze der Elemente der dritten und vierten Hauptgruppe, der zweiten, vierten, achten Nebengruppe und der Lanthanoidgruppe, Ammoniumsalze, primäre, sekundäre, tertiäre, quarternäre Alkyl- und/oder Aryl-Ammoniumsalz handelt.

3. Verfahren nach Anspruch 1 oder 2, **dadurch gekennzeichnet, dass** es sich bei den Olefinen um Ethylen, 1-Propylen, 1-Buten, 1-Penten, 1-Hexen, Styrol, Allylamin, Allylalkohol, Allyl- und Vinylalkoholether, Acrylsäure, Acrylsäureester, Vinylacetat und/oder 1,3-Butadien handelt.

4. Verfahren nach einem oder mehreren der Ansprüche 1 bis 3, **dadurch gekennzeichnet, dass** es sich bei den Übergangsmetallen und/oder Übergangsmetallverbindungen um solche aus der siebten und achten Nebengruppe handelt.

5. Verfahren nach einem oder mehreren der Ansprüche 1 bis 4, **dadurch gekennzeichnet, dass** es sich bei den Übergangsmetallen und/oder Übergangsmetallverbindungen um Rhodium, Nickel, Palladium und/oder Platin handelt.

6. Herstellung von Alkylphosphonigsäuren, -salzen und -estern nach einem oder mehreren der Ansprüche 1 bis 5 und anschließende Verwendung dieser Produkte
- als Binder,
- als Vernetzer bzw. Beschleuniger beim Aushärten von Epoxyharzen, Polyurethanen, ungesättigten Polyesterharzen.
- als Pflanzenschutzmittel,
- als Mineralöl-Additiv,
- als Korrosionsschutzmittel,
- in Wasch- und Reinigungsmittelanwendungen,
- in Elektronikanwendungen.

7. Herstellung von Alkylphosphonigsäuren, -salzen und -estern nach einem oder mehreren der Ansprüche 1 bis 5 und anschließende Verwendung dieser Produkte als Flammschutzmittel für Klarlacke und Intumeszenzbeschichtungen, als Flammschutzmittel für Holz und andere cellulosehaltige Produkte und/oder zum flammhemmend Ausrüsten von Polyester und Cellulose-Rein- und Mischgeweben durch Imprägnierung.

## Claims

1. A process for the production of alkylphosphonous acids, of alkylphosphonous salts, and of alkylphosphonous esters, which comprises reacting a source of phosphinic acid with olefins in the presence of a catalyst, wherein the olefins comply with the general formula (II)
R¹R²C=CR³R⁴ (II)
in which R¹ to R⁴ are identical or different and are hydrogen, an alkyl group having from 1 to 18 carbon atoms, and/or an alkenyl group having from 2 to 18 carbon atoms, and/or are an aryl group having from 8 to 18 carbon atoms, and/or functional groups such as carbonyl, aldehyde, carboxy, hydroxy, sulfonic acid, nitrile, cyano, and/or epoxy groups; or are primary, secondary, and/or tertiary amino groups, and/or ester or ether groups, and wherein the catalysts are transition metals and/or transition metal compounds and/or catalyst systems composed of a transition metal and/or of a transition metal compound, and of at least one ligand, and where the source of phosphinic acid is phosphinic acid (hypophosphorous acid H₃PO₂), a salt of phosphinic acid, an ester of phosphinic acid, or a mixture of these, and removing insoluble product by filtration.

2. The process as claimed in claim 1, wherein the salt of phosphinic acid is an alkali metal salt, an alkaline earth metal salt, a salt of the elements of the third or fourth main group and of the second, fourth, or eighth transition group, or of the lanthanoid group, an ammonium salt, or a primary, secondary, tertiary, or quaternary alkyl- or arylammonium salt.

3. The process as claimed in claim 1 or 2, wherein the olefins are ethylene, 1-propylene, 1-butene, 1-pentene, 1-hexene, styrene, allylamine, allyl alcohol, allyl alcohol ether and vinyl alcohol ether, acrylic acid, acrylic ester, vinyl acetate, and/or 1,3-butadiene.

4. The process as claimed in one or more of claims 1 to 3, wherein the transition metals and/or transition metal compounds are those of the seventh and eighth transition group.

5. The process as claimed in one or more of claims 1 to 4, wherein the transition metals and/or transition metal compounds involve rhodium, nickel, palladium, and/or platinum.

6. The production of alkylphosphonous acids, of alkylphosphonous salts, and of alkylphosphonous esters, as claimed in one or more of claims 1 to 5, and subsequent use of these products
- as binder,
- as crosslinking agent or accelerator in the hardening of epoxy resins, of polyurethanes, or of unsaturated polyester resins,
- as plant-protection agents,
- as petroleum additive,
- as corrosion-protection agent,
- in laundry-detergent applications and cleaning-product applications, or
- in electronics applications.

7. The production of alkylphosphonous acids, of alkylphosphonous salts, and of alkylphosphonous esters, as claimed in one or more of claims 1 to 5, and subsequent use of these products as flame retardant for clearcoats and intumescent coatings, as flame retardant for wood and other cellulose-containing products, and/or for providing flame retardancy to polyester and to unblended or blended cellulose textiles via impregnation.

## Revendications

1. Procédé pour la préparation d'acides alkylphosphoneux, de sels et d'esters d'acides alkylphosphoneux, **caractérisé en ce qu'**on transforme une source d'acide phosphinique avec des oléfines en présence d'un catalyseur, les oléfines correspondant à la formule générale (II),
R¹R²C=CR³R⁴ (II)
dans laquelle R¹ à R⁴ sont identiques ou différents et représentent hydrogène, un groupe alkyle comprenant 1 à 18 atomes de carbone et/ou un groupe alcényle comprenant 2 à 18 atomes de carbone et/ou un groupe aryle comprenant 8 à 18 atomes de carbone et/ou des groupes fonctionnels tels que des groupes carbonyle, aldéhyde, carboxy, hydroxy, acide sulfonique, nitrile, cyano et/ou époxy ; des groupes amino primaires, secondaires et/ou tertiaires et/ou des groupes ester ou éther, et où il s'agit, pour le catalyseur, de métaux de transition et/ou de composés de métal de transition et/ou de systèmes catalytiques, qui sont composés d'un métal de transition et/ou d'un composé de métal de transition et d'au moins un ligand et où il s'agit, pour la source d'acide phosphinique, d'acide phosphinique (acide hypophosphoreux H₃PO₂), d'un sel de l'acide phosphinique, d'un ester de l'acide phosphinique ou de leurs mélanges, et on sépare le produit insoluble par filtration.

2. Procédé selon la revendication 1, **caractérisé en ce qu'**il s'agit, pour le sel de l'acide phosphinique, de sels de métal alcalin, de sels de métal alcalino-terreux, de sels des éléments du troisième et quatrième groupe principal, du deuxième, quatrième, huitième groupe secondaire et du groupe des lanthanides, de sels d'ammonium, de sel d'alkylammonium et/ou d'arylammonium primaire, secondaire, tertiaire, quaternaire.

3. Procédé selon la revendication 1 ou 2, **caractérisé en ce qu'**il s'agit, pour les oléfines, d'éthylène, de 1-propylène, de 1-butène, de 1-pentène, de 1-hexène, de styrène, d'allylamine, d'alcool allylique, d'éther d'alcool allylique et d'éther d'alcool vinylique, d'acide acrylique, d'ester de l'acide acrylique, d'acétate de vinyle et/ou de 1,3-butadiène.

4. Procédé selon l'une ou plusieurs des revendications 1 à 3, **caractérisé en ce qu'**il s'agit, pour les métaux de transition et/ou les composés de métal de transition de ceux du septième et huitième groupe secondaire.

5. Procédé selon l'une ou plusieurs des revendications 1 à 4, **caractérisé en ce qu'**il s'agit, pour les métaux de transition et/ou les composés de métal de transition, de rhodium, de nickel, de palladium et/ou de platine.

6. Préparation d'acides alkylphosphoneux, de sels et d'esters d'acides alkylphosphoneux selon l'une ou plusieurs des revendications 1 à 5 et utilisation consécutive de ces produits
- comme liants,
- comme réticulants ou accélérateurs lors du durcissement de résines époxy, de polyuréthanes et de résines de polyester insaturées,
- comme agents de phytoprotection,
- comme additifs pour huiles minérales,
- comme agents de protection contre la corrosion,
- dans des utilisations d'agent de lavage et de nettoyage,
- dans les applications électroniques.

7. Préparation d'acides alkylphosphoneux, de sels et d'esters d'acides alkylphosphoneux selon l'une ou plusieurs des revendications 1 à 5 et utilisation consécutive de ces produits comme agent ignifuges pour les laques claires et les revêtements intumescents, comme agents ignifuges pour le bois et d'autres produits contenant de la cellulose et/ou pour l'apprêt inhibiteur de flammes de polyesters et de tissus de cellulose pure et de tissus mixtes par imprégnation.
